# EUROPEAN PATENT APPLICATION

(11) **EP 4 250 164 A1**
(43) Date of publication of application: **27.09.2023**
(21) Application number: 22305354.7
(22) Date of filing: 24.03.2022
(51) Int. Cl.: G06F 30/10

(54) **SKETCH-PROCESSING**

(71) Applicant: Dassault Systèmes, 78140 Vélizy-Villacoublay (FR)
(72) Inventor: MEHR, ÉLOI, Vélizy-Villacoublay (FR); JOURDAN, ARIANE, Vélizy-Villacoublay (FR)
(74) Representative: Bandpay & Greuter

(57) **Abstract**

The disclosure notably relates to a computer-implemented method for sketch-processing. The method comprises providing one or more input sketches. The method comprises determining one or more output sketches from the one or more input sketches. Each output sketch is closed and manifold. The determining of the one or more output sketches comprises constructing a set of manifold sketches including each manifold input sketch. The constructing of the set of manifold sketches comprises, for each respective non-manifold input sketch, determining two or more respective manifold sketches based on at least one intra-sketch intersection of the respective non-manifold input sketch. The determining of the one or more output sketches comprises combining each pair of manifold sketches of the constructed set that share at least two intersections, so as to form one or more closed and manifold sketches. The method forms an improved solution for sketch-processing.

## Description

### TECHNICAL FIELD

The disclosure relates to the field of computer programs and systems, and more specifically to a method, system and program for sketch-processing.

### BACKGROUND

A number of systems and programs are offered on the market for the design, the engineering and the manufacturing of objects. CAD is an acronym for Computer-Aided Design, e.g. it relates to software solutions for designing an object. CAE is an acronym for Computer-Aided Engineering, e.g., it relates to software solutions for simulating the physical behavior of a future product. CAM is an acronym for Computer-Aided Manufacturing, e.g., it relates to software solutions for defining manufacturing processes and operations. In such computer-aided design systems, the graphical user interface plays an important role as regards the efficiency of the technique. These techniques may be embedded within Product Lifecycle Management (PLM) systems. PLM refers to a business strategy that helps companies to share product data, apply common processes, and leverage corporate knowledge for the development of products from conception to the end of their life, across the concept of extended enterprise. The PLM solutions provided by Dassault Systèmes (under the trademarks CATIA, ENOVIA, SIMULIA and DELMIA) provide an Engineering Hub, which organizes product engineering knowledge, a Manufacturing Hub, which manages manufacturing engineering knowledge, and an Enterprise Hub which enables enterprise integrations and connections into both the Engineering and Manufacturing Hubs. All together the system delivers an open object model linking products, processes, resources to enable dynamic, knowledge-based product creation and decision support that drives optimized product definition, manufacturing preparation, production and service.

Existing solutions allow only a limited and/or insufficient processing of sketches. In particular, some of them are based on a neural network approach and allow generating 2D splines or 3D shapes from sketches, drawings or pictures. However, none of them brings sufficient results for sketch-processing.

Within this context, there is still a need for an improved solution for sketch-processing.

### SUMMARY

It is therefore provided a computer-implemented method for sketch-processing. The method for sketch-processing is referred to as "the sketch-processing method". The sketch-processing method comprises providing one or more input sketches. The one or more input sketches include at least one non-manifold sketch. Each non-manifold sketch is a sketch that has at least one intra-sketch intersection. Alternatively or additionally, the one or more input sketches include at least one pair of sketches that share at least two inter-sketch intersections. The sketch-processing method comprises determining one or more output sketches from the one or more input sketches. Each output sketch is closed and manifold. The determining of the one or more output sketches comprises constructing a set of manifold sketches including each manifold input sketch. The constructing of the set of manifold sketches comprises, for each respective non-manifold input sketch, determining two or more respective manifold sketches based on the at least one intra-sketch intersection of the respective non-manifold input sketch. The constructed set further includes each manifold sketch determined for each respective non-manifold input sketch. The determining of the one or more output sketches comprises combining each pair of manifold sketches of the constructed set that share at least two intersections, so as to form one or more closed and manifold sketches. The one or more output sketches include each closed sketch of the constructed set and each closed and manifold sketch formed by the combining.

The sketch-processing method may comprise one or more of the following:
- each input sketch is oriented, the determining of the two or more respective manifold sketches comprising recursively splitting the respective non-manifold input sketch, the recursive splitting comprising:
   ∘ browsing the respective non-manifold input sketch;
   ∘ encountering a point of the intra-sketch intersection;
   ∘ splitting the respective non-manifold input sketch at the encountered point of the intra-sketch intersection, thereby forming two sketch pieces; and
   ∘ for each sketch piece:
      ▪ if the sketch piece has no intra-sketch intersection, determining the sketch piece as one of the two or more respective manifold sketches; or
      ▪ if the sketch piece has at least one intra-sketch intersection, repeating the recursive splitting with the sketch piece;
- the one or more input sketches comprise one or more closed non-manifold input sketch, and for each closed respective non-manifold input sketch, the splitting of the respective non-manifold input sketch comprises:
   ∘ browsing the non-manifold input sketch starting from the point of the intra-sketch intersection;
   ∘ encountering another point of the intra-sketch intersection;
   ∘ extracting the sketch piece from the non-manifold input sketch between the point and the another point of the intra-sketch intersection, thereby defining one of the two sketch pieces and a remaining sketch piece of the non-manifold input sketch; and
   ∘ defining the remaining sketch piece as the another one of the two sketch pieces; and/or
- the one or more input sketches comprise one or more open non-manifold input sketch, and for each open respective non-manifold input sketch, the splitting of the respective non-manifold input sketch comprises:
   ∘ browsing the non-manifold input sketch starting from the point of the intra-sketch intersection;
   ∘ encountering another point of the intra-sketch intersection;
   ∘ extracting the sketch piece from the non-manifold input sketch between the point and the another point of the intra-sketch intersection, thereby defining one of the two sketch pieces and two remaining sketch pieces of the non-manifold input sketch, each of the two remaining sketch pieces being open; and
   ∘ joining the remaining two sketch pieces, thereby forming the another one of the two sketch pieces;
- each pair of manifold sketches comprises a first manifold sketch and a second manifold sketch, the forming of the one or more closed sketches comprising:
   ∘ for each pair of successive intersections between the first manifold sketch and the second manifold sketch along the second manifold sketch:
      ▪ extracting the portion of the second manifold sketch delimited by these two successive intersections;
      ▪ splitting the first manifold sketch between these two successive intersections, thereby obtaining one or two segments of the first manifold sketch; and
      ▪ recombining each segment of the first manifold sketch with the extracted portion of the second manifold sketch, thereby obtaining one or two closed and manifold sketches;
- the constructed set of manifold sketches consists of unique sketches;
- the providing of the one or more input sketches comprises:
   ∘ obtaining a set of sketch fragments;
   ∘ generating one or more aggregations of connected sketch fragments from the obtained set of sketch fragments, thereby obtaining the one or more input sketches;
- each fragment has two extremities, two fragments being connectable when the extremity of one is distant from the extremity of the other one below a predetermined threshold, the generating of the one or more aggregations of connected sketch fragments comprising, for each sketch fragment of the set, constructing one or more sketches containing the sketch fragment by, for each constructed sketch, successively connecting sketch fragments until no other sketch fragment from the set is connectable to the constructed sketch;
- the obtaining of the sketch fragments is performed upon user interaction and/or:
   ∘ by fitting one or more curves and/or detecting one or more specific geometric curves on
      ▪ a drawing,
      ▪ automatically-detected edges on an image, and/or
      ▪ manually traced edges on an image, and/or
   ∘ by fitting oriented curves to a projection of profile-based approximate surfaces detected on 3D scans; and/or
- the constructed set of manifold sketches consists of closed sketches.

It is further provided a computer-implemented method for generating a 2D shape. The method for generating a 2D shape is referred to as "the 2D generating method". The 2D generating method comprises performing the method for sketch-processing, thereby outputting one or more closed and manifold sketches. The 2D generating method comprises generating one or more 2D surfaces based on the outputted one or more closed and manifold sketches. Each 2D surface is inside one of the determined one or more closed and manifold sketches. The 2D generating method comprises forming the 2D shape based on the generated one or more 2D surfaces.

It is further provided a computer-implemented method for generating a 3D shape. The method for generating a 3D shape is referred to as "the 3D generating method". The 3D generating method comprises performing the method for sketch-processing, thereby outputting one or more closed and manifold sketches. The 3D generating method comprises generating one or more 3D portions based on the outputted one or more closed and manifold sketches. Each 3D portion is an extrusion or a revolution of one of the outputted one or more closed and manifold sketches. The 3D generating method comprises forming the 3D shape based on the generated one or more 3D portions.

It is further provided a computer-implemented method for fitting profile-based volumes to an approximate surface. The method for fitting profile-based volumes to an approximate surface may be referred to as "the fitting method". The fitting method comprises segmenting the approximate surface into surface portions. The fitting method comprises detecting one or more directions for generation of a 3D profile-based volume (each such direction being a direction defining/specifying a 3D profile-based volume generation, e.g., an extrusion direction or a revolve direction) and, for each direction, one or more respective surface portions. The fitting method comprises, for each of the one or more detected directions, generating a set of sketch fragments by projecting each of the one or more respective surface portions onto a plane orthonormal to the direction. The fitting method comprises, for each of the one or more detected directions, performing the method for sketch-processing on the generated set of sketch fragments, thereby outputting one or more closed and manifold sketches. The fitting method comprises, for each of the one or more detected directions, generating a 3D profile-based volume from the generated one or more closed and manifold sketches. The generating of the 3D profile-based volume may comprise extruding the generated one or more closed and manifold sketches according to the detected direction. In that case, the detected direction may be an extrusion direction and the 3D volume may be a 3D extrusion volume. Alternatively, the generating of the 3D profile-based volume may comprise revolving the generated one or more closed and manifold sketches according to the detected direction. In that case, the detected direction may be a revolution direction and the 3D volume may be a 3D revolution volume.

It is further provided a computer program comprising instructions for performing the sketch-processing method, the 2D generating method, the 3D generating method and/or the fitting method.

It is further provided a computer readable storage medium having recorded thereon the computer program. The data storage medium may be configured to be comprised in a device forming or serving as a non-transitory computer-readable medium, for example on a SaaS (Software as a service) or other server, or a cloud-based platform, or the like.

It is further provided a system comprising a processor coupled to a memory, the memory having recorded thereon the computer program. The system may further comprise a graphical user interface coupled to the processor.

### BRIEF DESCRIPTION OF THE DRAWINGS

Non-limiting examples will now be described in reference to the accompanying drawings, where:
- FIG. 1 shows a flowchart of an example of the sketch-processing method;
- FIG.s 2 and 3 illustrate two examples of the providing of input sketches;
- FIG.s 4 and 5 illustrate an example of the determining of output sketches;
- FIG. 6 illustrates intersecting sketch fragments being split prior to being aggregated;
- FIG.s 7 and 8 illustrate examples of the closing of open sketches;
- FIG. 9 illustrates two examples of sketch-processing by the sketch-processing method;
- FIG. 10 illustrates an example of a set of sketch fragments;
- FIG. 11 illustrates two examples of the 2D and 3D generating methods;
- FIG. 12 illustrates an example of the fitting method;
- FIG. 13 illustrates an example of the 3D generating method;
- FIG. 14 shows an example of a graphical user interface of the system; and
- FIG. 15 shows an example of the system.

### DETAILED DESCRIPTION

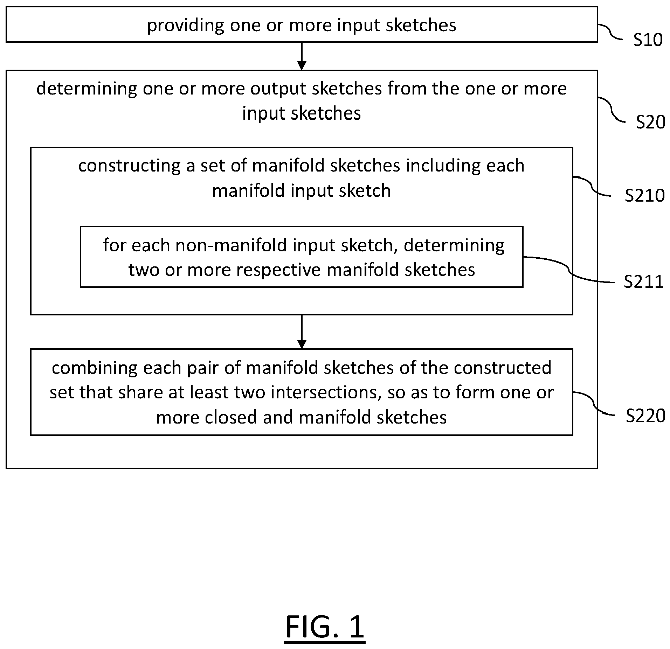

With reference to the flowchart of FIG. 1, it is proposed a computer-implemented method for sketch-processing. The method for sketch-processing is referred to as "the sketch-processing method". The sketch-processing method comprises providing S10 one or more input sketches. The one or more input sketches include at least one non-manifold sketch. Each non-manifold sketch is a sketch that has at least one intra-sketch intersection. Alternatively or additionally, the one or more input sketches include at least one pair of sketches that share at least two inter-sketch intersections. The sketch-processing method comprises determining S20 one or more output sketches from the one or more input sketches. Each output sketch is closed and manifold. The determining of the one or more output sketches comprises constructing S210 a set of manifold sketches including each manifold input sketch. Each sketch of the constructed set is manifold. The constructing of the set of manifold sketches comprises, for each respective non-manifold input sketch, determining S211 two or more respective manifold sketches based on the at least one intra-sketch intersection of the respective non-manifold input sketch. The constructed set further includes each manifold sketch determined at S211. In other words, the set constructed at S210 is populated with each manifold input sketch and each manifold sketch determined at S211. The determining of the one or more output sketches comprises combining S220 each pair of manifold sketches of the constructed set that share at least two intersections, so as to form one or more closed and manifold sketches. The one or more output sketches include each closed sketch of the constructed set and each closed and manifold sketch formed by the combining. Such a sketch-processing method forms an improved solution for the processing of sketches.

Notably, the sketch-processing method allows generating one or more closed and manifold sketches from the one or more input sketches. Indeed, the sketch-processing method determines one or more output sketches that are each closed and manifold based on, firstly, constructing a set of manifold sketches and, secondly, combining pairs of manifold sketches from the constructed set. This determination of the one or more output sketches is particularly efficient and allows the determined set of one or more closed and manifold sketches to be relatively exhaustive (i.e., including each meaningful closed and manifold sketch that may be generated from the one or more input sketches or portions thereof). Constructing a set of manifold sketches first and then combining pairs of sketches sharing at least to intersections in that set improves the efficiency for achieving this result.

In particular, the construction of a set of manifold sketches allows to reach the result in a faster and more certain way, compared to a brute force solution that would consist in cutting each of the input sketches into sketch fragments and building all possible combinations of the sketch fragments. Moreover, the sketch-processing method combines pairs of sketches that are manifold and share at least two intersections, which allows to obtain quickly and in a reduced number of combinations a relevant and exhaustive set (the cutting in the brute force solution leading to a high combinatorial complexity). The sketch-processing method thus allows to make a relevant compromise between the exhaustiveness of the result and the computation time to reach it.

Moreover, the sketch-processing method does not suffer from drawbacks of prior art methods based on a neural network approach. Indeed, firstly, the sketch-processing method leverages efficiently and exactly the local geometric attributes of the sketches (e.g., linearity or circularity). The sketch-processing method allows generating sketches that fit perfectly to the input sketches. Additionally, the determined output sketches are more efficient in terms of storage and more intuitive for the user to manipulate when editing. Secondly, the sketch-processing method is not dependent on training data, unlike with deep learning approaches. This avoids the need to gather large datasets for training. It also avoids poor performance when the inputs for which the outputs are unknown are too different from those on which they were trained (e.g., the sketch-processing method may perform as well on sketches representing chairs as on sketches representing cars).

Furthermore, the sketch-processing method may serve for ergonomically reconstructing an original shape from the one or more input sketches. Indeed, each of the generated one or more output sketches is closed and manifold and thus allows obtaining a valid 2D shape or 3D shape. The sketch-processing method therefore allows reconstructing the original shape by providing a way to obtain automatically 2D surfaces or 3D portions valid for forming the original shape.

"Designing a manufacturing product/mechanical part/mechanical product" designates any action or series of actions which is at least a part of a process of elaborating a modeled object (3D or 2D) of the manufacturing product/mechanical part/mechanical product. The sketch-processing method, the 2D generating method, the 3D generating method and/or the fitting method may form such a design process or may form at least a part of the design process. The process may comprise the following steps:
- Obtaining one or more sketches. The obtaining of the one or more sketches may comprise, for each sketch, defining the sketch based on user interactions (e.g., by drawing the sketch on a touch screen) and/or automatically determining the one or more sketches from a scan and/or an image. The obtaining of the one or more sketches is discussed in more details in the following.
- Performing the sketch-processing method, thereby outputting one or more closed and manifold sketches, wherein the obtained one or more sketches are the provided one or more input sketches.
- Generating a 2D/3D shape based on the outputted one or more closed and manifold sketches according to the 2D/3D generating method.
- Optionally, editing the generated 2D/3D shape. The editing may comprise performing a simulation based on the generated 2D/3D shape, analyzing results of the simulation and modifying the generated 2D/3D shape accordingly.
- The design process may be followed by manufacturing (e.g. automatically) a manufacturing product/mechanical part/mechanical product based on the generated 2D/3D shape (optionally as edited).

The 2D generating method, the 3D generating method and/or the fitting method generally manipulate modeled objects, such as the formed 2D shape, the formed 3D shape and/or the generated 3D extrusion volumes. A modeled object is any object defined by data stored e.g. in the database. By extension, the expression "modeled object" designates the data itself. According to the type of the system, the modeled objects may be defined by different kinds of data. The system may indeed be any combination of a CAD system, a CAE system, a CAM system, a PDM system and/or a PLM system. In those different systems, modeled objects are defined by corresponding data. One may accordingly speak of CAD object, PLM object, PDM object, CAE object, CAM object, CAD data, PLM data, PDM data, CAM data, CAE data. However, these systems are not exclusive one of the other, as a modeled object may be defined by data corresponding to any combination of these systems. A system may thus well be both a CAD, CAE, PLM and/or CAM system, as will be apparent from the definitions of such systems provided below.

By CAD solution (*e*.*g*. a CAD system or a CAD software), it is additionally meant any system, software or hardware, adapted at least for designing a modeled object on the basis of a graphical representation of the modeled object and/or on a structured representation thereof (*e*.*g*. a feature tree), such as CATIA. In this case, the data defining a modeled object comprise data allowing the representation of the modeled object. A CAD system may for example provide a representation of CAD modeled objects using edges or lines, in certain cases with faces or surfaces. Lines, edges, or surfaces may be represented in various manners, e.g. non-uniform rational B-splines (NURBS). Specifically, a CAD file contains specifications, from which geometry may be generated, which in turn allows for a representation to be generated. Specifications of a modeled object may be stored in a single CAD file or multiple ones. The typical size of a file representing a modeled object in a CAD system is in the range of one Megabyte per part. And a modeled object may typically be an assembly of thousands of parts.

In the context of CAD, a modeled object may typically be a 2D or 3D modeled object, e.g. representing a product such as a part or an assembly of parts, or possibly an assembly of products. The 2D or 3D modeled object may be a manufacturing product, *i*.*e*. a product to be manufactured. By "3D modeled object", it is meant any object which is modeled by data allowing its 3D representation. A 3D representation allows the viewing of the part from all angles. For example, a 3D modeled object, when 3D represented, may be handled and turned around any of its axes, or around any axis in the screen on which the representation is displayed. This notably excludes 2D icons, which are not 3D modeled. The display of a 3D representation facilitates design (i.e. increases the speed at which designers statistically accomplish their task). This speeds up the manufacturing process in the industry, as the design of the products is part of the manufacturing process.

The 2D or 3D modeled object may represent the geometry of a product to be manufactured in the real world subsequent to the completion of its virtual design with for instance a CAD/CAE software solution or CAD/CAE system, such as a (e.g. mechanical) part or assembly of parts (or equivalently an assembly of parts, as the assembly of parts may be seen as a part itself from the point of view of the method, or the method may be applied independently to each part of the assembly), or more generally any rigid body assembly (e.g. a mobile mechanism). A CAD/CAE software solution allows the design of products in various and unlimited industrial fields, including: aerospace, architecture, construction, consumer goods, high-tech devices, industrial equipment, transportation, marine, and/or offshore oil/gas production or transportation. The 3D modeled object designed by the method may thus represent an industrial product which may be any mechanical part, such as a part of a terrestrial vehicle (including e.g. car and light truck equipment, racing cars, motorcycles, truck and motor equipment, trucks and buses, trains), a part of an aerial vehicle (including e.g. airframe equipment, aerospace equipment, propulsion equipment, defense products, airline equipment, space equipment), a part of a naval vehicle (including e.g. navy equipment, commercial ships, offshore equipment, yachts and workboats, marine equipment), a general mechanical part (including e.g. industrial manufacturing machinery, heavy mobile machinery or equipment, installed equipment, industrial equipment product, fabricated metal product, tire manufacturing product), an electro-mechanical or electronic part (including e.g. consumer electronics, security and/or control and/or instrumentation products, computing and communication equipment, semiconductors, medical devices and equipment), a consumer good (including e.g. furniture, home and garden products, leisure goods, fashion products, hard goods retailers' products, soft goods retailers' products), a packaging (including e.g. food and beverage and tobacco, beauty and personal care, household product packaging).

A CAD system may be history-based. In this case, a modeled object is further defined by data comprising a history of geometrical features. A modeled object may indeed be designed by a physical person (i.e. the designer/user) using standard modeling features (e.g. extrude, revolute, cut, and/or round) and/or standard surfacing features (e.g. sweep, blend, loft, fill, deform, and/or smoothing). Many CAD systems supporting such modeling functions are history-based system. This means that the creation history of design features is typically saved through an acyclic data flow linking the said geometrical features together through input and output links. The history based modeling paradigm is well known since the beginning of the 80's. A modeled object is described by two persistent data representations: history and B-rep (i.e. boundary representation). The B-rep is the result of the computations defined in the history. The shape of the part displayed on the screen of the computer when the modeled object is represented is (e.g. a tessellation of) the B-rep. The history of the part is the design intent. Basically, the history gathers the information on the operations which the modeled object has undergone. The B-rep may be saved together with the history, to make it easier to display complex parts. The history may be saved together with the B-rep in order to allow design changes of the part according to the design intent.

By PLM system, it is additionally meant any system adapted for the management of a modeled object representing a physical manufactured product (or product to be manufactured). In a PLM system, a modeled object is thus defined by data suitable for the manufacturing of a physical object. These may typically be dimension values and/or tolerance values. For a correct manufacturing of an object, it is indeed better to have such values.

By CAE solution, it is additionally meant any solution, software of hardware, adapted for the analysis of the physical behavior of a modeled object. A well-known and widely used CAE technique is the Finite Element Model (FEM) which is equivalently referred to as CAE model hereinafter. An FEM typically involves a division of a modeled object into elements, i.e., a finite element mesh, which physical behaviors can be computed and simulated through equations. Such CAE solutions are provided by Dassault Systèmes under the trademark SIMULIA^{®}. Another growing CAE technique involves the modeling and analysis of complex systems composed a plurality of components from different fields of physics without CAD geometry data. CAE solutions allow the simulation and thus the optimization, the improvement and the validation of products to manufacture. Such CAE solutions are provided by Dassault Systèmes under the trademark DYMOLA^{®}.

By CAM solution, it is meant any solution, software of hardware, adapted for managing the manufacturing data of a product. The manufacturing data generally include data related to the product to manufacture, the manufacturing process and the required resources. A CAM solution is used to plan and optimize the whole manufacturing process of a product. For instance, it may provide the CAM users with information on the feasibility, the duration of a manufacturing process or the number of resources, such as specific robots, that may be used at a specific step of the manufacturing process; and thus allowing decision on management or required investment. CAM is a subsequent process after a CAD process and potential CAE process. For example, a CAM solution may provide the information regarding machining parameters, or molding parameters coherent with a provided extrusion feature in a CAD model. Such CAM solutions are provided by Dassault Systèmes under the trademarks CATIA, Solidworks or trademark DELMIA^{®}.

CAD and CAM solutions are therefore tightly related. Indeed, a CAD solution focuses on the design of a product or part and CAM solution focuses on how to make it. Designing a CAD model is a first step towards a computer-aided manufacturing. Indeed, CAD solutions provide key functionalities, such as feature based modeling and boundary representation (B-Rep), to reduce the risk of errors and the loss of precision during the manufacturing process handled with a CAM solution. Indeed, a CAD model is intended to be manufactured. Therefore, it is a virtual twin, also called digital twin, of an object to be manufactured with two objectives:
- checking the correct behavior of the object to be manufactured in a specific environment; and
- ensuring the manufacturability of the object to be manufactured.

PDM stands for Product Data Management. By PDM solution, it is meant any solution, software of hardware, adapted for managing all types of data related to a particular product. A PDM solution may be used by all actors involved in the lifecycle of a product: primarily engineers but also including project managers, finance people, sales people and buyers. A PDM solution is generally based on a product-oriented database. It allows the actors to share consistent data on their products and therefore prevents actors from using divergent data. Such PDM solutions are provided by Dassault Systèmes under the trademark ENOVIA^{®}.

The modeled object may be a 2D/3D discrete geometrical representation of a manufacturing product/mechanical product/mechanical part The discrete geometrical representation is a data structure which comprises a discrete set of pieces of data. Each piece of data may specify an element of the product/mechanical part, and be referred to as a discrete element. The discrete geometrical representation may be 3D or alternatively 2D. Yet alternatively, the discrete geometrical representation may be both 3D and 2D, *i.e.* may comprise a 3D portion which is a 3D discrete geometrical representation and a 2D portion which is a discrete geometrical representation, such as a hybrid 3D-2D meshing (*e*.*g*. for modeling a product comprising both thin parts, modeled with the 2D portions, and thick parts, modeled with the 3D portions). The discrete geometrical representation may in examples comprise a number of such pieces of data higher than 100, 1000, or 10000.

In case of a 3D discrete geometrical representation, the 3D discrete geometrical representation may be a solid/volume 3D discrete geometrical representation of the product/mechanical part, such as a solid 3D finite element model (FEM) or a 3D volume mesh (*e*.*g*. a 3D tetrahedral mesh). In such a case, each piece of data may represent a respective geometrical entity positioned in a 3D space such that the pieces of data form a solid representation of the mechanical part/product (i.e., "solid 3D discrete geometrical representation"). Each geometrical entity may represent a respective location (i.e., a material point) of the 3D object (in other words, a respective portion of material constitutive of a solid represented by the 3D object). The aggregation (i.e., union or juxtaposition) of the geometrical entities represents altogether the 3D object as a solid/volume. The 3D discrete geometrical representation may alternatively be a skin 3D discrete geometrical representation, representing a skin of the product/mechanical part, such as a 3D surface mesh (*e*.*g*. a triangular surface mesh) or a tessellation. In such a case, each piece of data may represent a respective geometrical entity positioned in a 3D space, such that the pieces of data form a representation of the mechanical product's skin (i.e., "skin 3D discrete geometrical representation"). In such a case, each geometrical entity represents a respective location (i.e., a material point) on an outer surface of the 3D object (in other words, a respective portion of outer surface of the volume occupied by material constitutive of a solid represented by the object). The aggregation (i.e., union or juxtaposition) of the geometrical entities represents altogether at least part of the outer surface of the object.

In the case of a 2D discrete geometrical representation, each piece of data may represent a respective geometrical entity positioned in a 2D space. The 2D discrete geometrical representation may be a 2D finite element mesh or any 2D mesh. The discrete geometrical representation may be associated with one or more thickness value(s), for example a distribution of thickness value over its finite elements. Such a 2D discrete geometrical representation may for example represent a generally planar product, such as a stamping part (e.g., with a constant thickness value) or a composite material part (e.g., with different thickness values).

The discrete geometrical representation may be, or may be converted into further to the method, a CAE model, also referred to as "finite element model (FEM)". The CAE model may stem from a CAD model representing the mechanical part/product, *e*.*g*. the method comprises at an initial stage obtaining the CAE model from the CAD model, for example using a meshing (*e*.*g*. triangulation) process. Conversely, a CAE model may be converted into a CAD model. The method may design/output a CAE model which may be then converted into a corresponding CAD model. The method may comprise, or may be included in wider process that comprises, or may form a solution to, (*e*.*g*. automatically) converting the CAE model designed/outputted by the method into a CAD model, by using any known (*e*.*g*. automatic) CAE to CAD conversion process that converts a CAE model into a CAD model.

The modeled object may alternatively be a CAD model, for example comprising or consisting in a feature tree and/or a B-rep. Such a model may stem from a CAE model and may results from a CAE to CAD conversion process, that the method may for example comprise at an initial stage.

The CAD model may be feature-based (*e*.*g*. it may comprise a feature tree, and optionally a corresponding B-rep obtained by executing the feature tree). A feature-based 3D model allows (*e*.*g*. during the determination of a manufacturing file or CAM file as discussed hereinafter) the detection and an automatic resolution of a geometry error in a CAD model such as a clash that will affect the manufacturing process. A clash is an interpenetration between two parts of a 3D model for example due to their relative motion. Furthermore, this clash may sometimes only be detected via a finite element analysis based on the CAD feature-based model. Therefore, a resolution of a clash can be performed with or automatically by the CAD solution by iteratively modifying the parameters of the features and doing a finite element analysis.

As another example, a feature-based 3D model allows (*e*.*g*. during the determination of a manufacturing file or CAM file as discussed hereinafter) an automatic creation of a toolpath for a machine via a computer numerical control (CNC). With CNC, each object to be manufactured gets a custom computer program, stored in and executed by the machine control unit, a microcomputer attached to the machine. The program contains the instructions and parameters the machine tool will follow. Mills, lathes, routers, grinders and lasers are examples of common machine tools whose operations can be automated with CNC.

The generation of a custom computer program from CAD files may be automated. Such generation may therefore be error prone and may ensure a perfect reproduction of the CAD model to a manufactured product. CNC is considered to provide more precision, complexity and repeatability than is possible with manual machining. Other benefits include greater accuracy, speed and flexibility, as well as capabilities such as contour machining, which allows milling of contoured shapes, including those produced in 3D designs.

The B-rep (i.e. boundary representation) is a 3D representation of a mechanical part. Specifically, the B-rep is a persistent data representation describing the 3D modeled object representing the mechanical part. The B-rep may be the result of computations and/or a series of operations carried out during a designing phase of the 3D modeled object representing the mechanical part. The shape of the mechanical part displayed on the screen of the computer when the modeled object is represented is (e.g. a tessellation of) the B-rep. In examples, the B-rep represents a part of the model object.

A B-Rep includes topological entities and geometrical entities. Topological entities are: face, edge, and vertex. Geometrical entities are 3D objects: surface, plane, curve, line, point. By definition, a face is a bounded portion of a surface, named the supporting surface. An edge is a bounded portion of a curve, named the supporting curve. A vertex is a point in 3D space. They are related to each other as follows. The bounded portion of a curve is defined by two points (the vertices) lying on the curve. The bounded portion of a surface is defined by its boundary, this boundary being a set of edges lying on the surface. The boundary of the edges of the face are connected by sharing vertices. Faces are connected by sharing edges. Two faces are adjacent if they share an edge. Similarly, two edges are adjacent if they share a vertex. In the CAD system, the B-Rep gathers in an appropriate data structure the "is bounded by" relationship, the relationship between topological entities and supporting geometries, and mathematical descriptions of supporting geometries. An internal edge of a B-Rep is an edge shared by exactly two faces. By definition, a boundary edge is not shared, it bounds only one face. By definition, a boundary face is bounded by at least one boundary edge. A B-Rep is said to be closed if all its edges are internal edges. A B-Rep is said to be open is it includes at least one boundary edge. A closed B-Rep is used to model a thick 3D volume because it defines the inside portion of space (virtually) enclosing material. An open B-Rep is used to model a 3D skin, which represents a 3D object the thickness of which is sufficiently small to be ignored.

A key advantage of the B-Rep over any other representation types used in CAD modeling is its ability to represent arbitrary shapes exactly. All other representations in use, such as point clouds, distance fields and meshes, perform an approximation of the shape to represent by discretization. The B-Rep, on the other hand, contains surface equations that represent the exact design and therefore constitutes a true "master model" for further manufacturing, whether this be generation of toolpaths for CNC, or discretizing into the correct sample density for a given 3D Printer technology. In other words, by using a B-Rep, the 3D model may be an exact representation of the manufactured object. The B-Rep is also advantageous for simulating the behavior of a 3D model. In terms of stress, thermal, electromagnetic or other analysis, it supports local refinement of the simulation meshes to capture physical phenomena, and for kinematics it supports true contact modeling between curved surfaces. Finally, a B-Rep allows a small memory and/or file footprint. First, because the representation contains surfaces based only on parameters. In other representations such as meshes, the equivalent surface comprises up to thousands of triangles. Second, because a B-Rep does not contain any history-based information.

The method may be included in a production process, which may comprise, after performing the method, producing a physical product corresponding to the modeled object designed/processed/outputted by the method. The production process may comprise the following steps:
- (*e*.*g*. automatically) applying the 2D generating method, the 3D generating method and/or the fitting method, thereby obtaining the CAD model or CAE model outputted by the method (i.e., the 2D shape, the 3D shape and/or the generated 3D extrusion volumes);
- optionally, (*e*.*g*. automatically) converting the obtained CAE model into a CAD model as previously discussed, using a (*e*.*g*. automatic) CAE to CAD conversion process;
- using the obtained CAD model for manufacturing the part/product.

Converting the CAE model into a CAD model may comprise executing the following (*e*.*g*. fully automatic) conversion process that takes as input a CAE and converts it into a CAD model comprising a feature-tree representing the product/part. The conversion process includes the following steps (where known fully automatic algorithms exist to implement each of these steps):
- segmenting the CAE model, or an outer surface/skin thereof, thereby obtaining a segmentation of the CAE model into segments, *e*.*g*. each forming a surface portion of the model;
- detecting geometries of CAD features by processing the segments, *e*.*g*. including detecting segments or groups of segments each forming a given CAD feature geometry (*e*.*g*. an extrusion, a revolution, or any canonic primitive), and optionally geometric characteristics thereof (*e*.*g*. extrusion axis, revolution axis, or profiles);

- parameterizing the detected geometries, *e*.*g*. based on the geometries and/or on said geometric characteristics thereof;
- fitting CAD operators each to a respective portion of the CAE model, based on a geometry of said portion, for example by aggregating neighboring segments detected as being part of a same feature geometry;
- encoding the geometries and the corresponding CAD operators into a feature tree;
- optionally, executing the feature tree, thereby obtaining a B-rep representation of the product;
- outputting the feature tree and optionally the B-rep, the feature tree and optionally the B-rep forming the CAD model.

Using a CAD model for manufacturing designates any real-world action or series of action that is/are involved in/participate to the manufacturing of the product/part represented by the CAD model. Using the CAD model for manufacturing may for example comprise the following steps:
- editing the obtained CAD model;
- performing simulation(s) based on the CAD model or on a corresponding CAD model (*e*.*g*. the CAE model from which the CAD model stems, after a CAE to CAD conversion process), such as simulations for validation of mechanical, use and/or manufacturing properties and/or constraints (*e.g.* structural simulations, thermodynamics simulation, aerodynamic simulations);
- editing the CAD model based on the results of the simulation(s);
- (*i*.*e*. depending on the manufacturing process used, the production of the mechanical product may or may not comprise this step) (*e*.*g*. automatically) determining a manufacturing file/CAM file based on the (*e*.*g*. edited) CAD model, for production/manufacturing of the manufacturing product;
- sending the CAD file and/or the manufacturing file/CAM file to a factory; and/or
- (*e.g.* automatically) producing/manufacturing, based on the determined manufacturing file/CAM file or on the CAD model, the mechanical product originally represented by the model outputted by the method. This may include feeding (*e*.*g*. automatically) the manufacturing file/CAM file and/or the CAD file to the machine(s) performing the manufacturing process.

This last step of production/manufacturing may be referred to as the manufacturing step or production step. This step manufactures/fabricates the part/product based on the CAD model and/or the CAM file, *e*.*g*. upon the CAD model and/or CAD file being fed to one or more manufacturing machine(s) or computer system(s) controlling the machine(s). The manufacturing step may comprise performing any known manufacturing process or series of manufacturing processes, for example one or more additive manufacturing steps, one or more cutting steps (e.g. laser cutting or plasma cutting steps), one or more stamping steps, one or more forging steps, one or more molding steps, one or more machining steps (e.g. milling steps) and/or one or more punching steps. Because the design method improves the design of a model (CAE or CAD) representing the part/product, the manufacturing and its productivity are also improved.

Editing the CAD model may comprise, by a user (*i.e.* a designer), performing one or more of the CAD model, *e*.*g*. by using a CAD solution. The modifications of the CAD model may include one or more modifications each of a geometry and/or of a parameter of the CAD model. The modifications may include any modification or series of modifications performed on a feature tree of the model (*e*.*g*. modification of feature parameters and/or specifications) and/or modifications performed on a displayed representation of the CAD model (*e*.*g*. a B-rep). The modifications are modifications which maintain the technical functionalities of the part/product, *i*.*e*. the user performs modifications which may affect the geometry and/or parameters of the model but only with the purpose of making the CAD model technically more compliant with the downstream use and/or manufacturing of the part/product. Such modifications may include any modification or series of modification that make the CAD model technically compliant with specifications of the machine(s) used in the downstream manufacturing process. Such modifications may additionally or alternatively include any modification or series of modification that make the CAD model technically compliant with a further use of the product/part once manufactured, such modification or series of modifications being for example based on results of the simulation(s).

The CAM file may comprise a manufacturing step up model obtained from the CAD model. The manufacturing step up may comprise all data required for manufacturing the mechanical product so that it has a geometry and/or a distribution of material that corresponds to what is captured by the CAD model, possibly up to manufacturing tolerance errors. Determining the production file may comprise applying any CAM (Computer-Aided Manufacturing) solution for (*e*.*g*. automatically) determining a production file from the CAD model (*e*.*g*. any automated CAD-to-CAM conversion algorithm).

The product/part may be an additive manufacturable part, *i.e.* a part to be manufactured by additive manufacturing (*i*.*e*. 3D printing). In this case, the production process does not comprise the step of determining the CAM file and directly proceeds to the producing/manufacturing step, by directly (*e*.*g*. and automatically) feeding a 3D printer with the CAD model. 3D printers are configured for, upon being fed with a CAD model representing a mechanical product (*e*.*g*. and upon launching, by a 3D printer operator, the 3D printing), directly and automatically 3D print the mechanical product in accordance with the CAD model. In other words, the 3D printer receives the CAD model, which is (*e*.*g*. automatically) fed to it, reads (*e.g.* automatically) the CAD model, and prints (*e.g.* automatically) the part by adding together material, *e*.*g*. layer by layer, to reproduce the geometry and/or distribution of material captured by the CAD model. The 3D printer adds the material to thereby reproduce exactly in reality the geometry and/or distribution of material captured by the CAD model, up to the resolution of the 3D printer, and optionally with or without tolerance errors and/or manufacturing corrections. The manufacturing may comprise, *e.g.* by a user (*e.g.* an operator of the 3D printer) or automatically (by the 3D printer or a computer system controlling it), determining such manufacturing corrections and/or tolerance errors, for example by modifying the CAD file to match specifications of the 3D printer. The production process may additionally or alternatively comprise determining (*e*.*g*. automatically by the 3D printer or a computer system controlling it) from the CAD model, a printing direction, for example to minimize overhang volume (such as described in European patent No. 3327593, which is incorporated herein by reference), a layer-slicing (i.e., determining thickness of each layer, and layer-wise paths/trajectories and other characteristics for the 3D printer head (e.g., for a laser beam, for example the path, speed, intensity/temperature, and other parameters).

The product/part may alternatively be a machined part (*i.e.* a part manufactured by machining), such as a milled part (*i.e.* a part manufactured by milling). In such a case, the production process may comprise a step of determining the CAM file. This step may be carried out automatically, by any suitable CAM solution to automatically obtain a CAM file from a CAD model of a machined part. The determination of the CAM file may comprise (*e*.*g*. automatically) checking if the CAD model has any geometric particularity (*e*.*g*. error or artefact) that may affect the production process and (*e*.*g*. automatically) correcting such particularities. For example, machining or milling based on the CAD model may not be carried out if the CAD model still comprises sharp edges (because the machining or milling tool cannot create sharp edges), and in such a case the determination of the CAM file may comprise (*e.g.* automatically) rounding or filleting such sharp edges (*e.g.* with a round or fillet radius that corresponds, *e*.*g*. substantially equals up to a tolerance error, the radius of the cutting head of the machining tool), so that machining or milling based on the CAD model can be done. More generally, the determination of the CAM file may automatically comprise rounding or filleting geometries within the CAD model that are incompatible with the radius of the machining or milling tool, to enable machining/milling. This check and possible corrections (*e*.*g*. rounding or filleting of geometries) may be carried out automatically as previously discussed, but also, by a user (*e*.*g*. a machining engineer), which performs the correction by hand on a CAD and/or CAM solution, *e*.*g*. the solution constraining the user to perform corrections that make the CAD model compliant with specifications of the tool used in the machining process.

Further to the check, the determination of the CAM file may comprise (*e*.*g*. automatically) determining the machining or milling path, *i*.*e*. the path to be taken by the machining tool to machine the product. The path may comprise a set of coordinates and/or a parameterized trajectory to be followed by the machining tool for machining, and determining the path may comprise (*e*.*g*. automatically) computing these coordinates and/or trajectory based on the CAD model. This computation may be based on the computation of a boundary of a Minkowski subtraction of the CAD model by a CAD model representation of the machining tool, as for example discussed in European Patent Application EP21306754.9 filed on 13 December 2021 by Dassault Systèmes, and which is incorporated herein by reference. It is to be understood that the path may be a single path, *e*.*g*. that the tool continuously follows without breaking contact with the material to be cut. Alternatively, the path may be a concatenation of a sequence sub-paths to be followed in a certain order by the tool, *e*.*g*. each being continuously followed by the tool without breaking contact with the material to be cut. Optionally, the determination of the CAM file may then comprise (*e*.*g*. automatically) setting machine parameters, including cutting speed, cut/pierce height, and/or mold opening stroke, for example based on the determined path and on the specification of the machine. Optionally, the determination of the CAM file may then comprise (*e*.*g*. automatically) configuring nesting where the CAM solution decides the best orientation for a part to maximize machining efficiency.

In this case of a machining or milling part, the determining of the CAM file thus results in, and outputs, the CAM file comprising a machining path, and optionally the set machine parameters and/or specifications of the configured nesting. This outputted CAM file may be then (*e*.*g*. directly and automatically) fed to the machining tool and/or the machining tool may then (*e*.*g*. directly and automatically) be programmed by reading the file, upon which the production process comprises the producing/manufacturing step where the machine performs the machining of the product according to the production file, *e*.*g*. by directly and automatically executing the production file. The machining process comprises the machining tool cutting a real-world block of material to reproduce the geometry and/or distribution of material captured by the CAD model, *e.g.* up to a tolerance error (*e.g.* tens of microns for milling).

The product/part may alternatively be a molded part, *i.e.* a part manufactured by molding (*e*.*g*. injection-molding). In such a case, the production process may comprise the step of determining the CAM file. This step may be carried out automatically, by any suitable CAM solution to automatically obtain a CAM file from a CAD model of a molded part. The determining of the CAM file may comprise (*e*.*g*. automatically) performing a sequence of molding checks based on the CAD model to check that the geometry and/or distribution of material captured by the CAD model is adapted for molding, and (*e*.*g*. automatically) performing the appropriate corrections if the CAD model is not adapted for molding. Performing the checks and the appropriate corrections (if any) may be carried out automatically, or, alternatively, by a user (*e*.*g*. a molding engineer), for example using a CAD and/or CAM solution that allows a user to perform the appropriate corrections on the CAD model but constraints him/her corrections that make the CAD model compliant with specifications of the molding tool(s). The checks may include: verifying that the virtual product as represented by the CAD model is consistent with the dimensions of the mold and/or verifying that the CAD model comprises all the draft angles required for demolding the product, as known *per se* from molding. The determining of the CAM file may then further comprise determining, based on the CAD model, a quantity of liquid material to be used for molding, and/or a time to let the liquid material harden/set inside the mold, and outputting a CAM file comprising these parameters. The production process then comprises (*e*.*g*. automatically) performing the molding based on the outputted file, where the mold shapes, for the determined hardening time, a liquid material into a shape that corresponds to the geometry and/or distribution of material captured by the CAD model, *e.g.* up to a tolerance error (*e.g.* up to the incorporation of draft angles or to the modification of draft angles, for demolding).

The product/part may alternatively be a stamped part, also possibly referred to as "stamping part", *i.e.* a part to be manufactured in a stamping process. The production process may in this case comprise (*e*.*g*. automatically) determining a CAM file based on the CAD model. The CAD model represents the stamping part, *e*.*g*. possible with one or more flanges if the part is to comprise some, and possibly in this latter case with extra material to be removed so as to form an unfolded state of one or more flanges of the part, as known *per se* from stamping. The CAD model thus comprises a portion that represents the part without the flanges (which is the whole part in some cases) and possibly an outer extra patch portion that represents the flanges (if any), with possibly the extra material (if any). This extra patch portion may present a g2-continuity over a certain length and then a g1-continuity over a certain length.

The determination of the CAM file may in this stamping case comprise (*e*.*g*. automatically) determining parameters of the stamping machine, for example a size of a stamping die or punch and/or a stamping force, based on the geometry and/or distribution of material of the virtual product as captured by the CAD model. If the CAD model also comprises the representation of the extra material to be removed so as to form an unfolded state of one or more flanges of the part, the extra material to be removed may for example be cut by machining, and determining the CAM file may also comprise determining a corresponding machining CAM file, *e*.*g*. as discussed previously. If there are one or more flanges, determining the CAM file may comprise determining geometrical specifications of the g2-continuity and g1-continuity portions that allow, after the stamping itself and the removal of the extra material, to fold in a folding process the flanges towards an inner surface of the stamped part and along the g2-continuity length. The CAM file thereby determined may thus comprise: parameters of the stamping tool, optionally said specifications for folding the flanges (if any), and optionally a machining production file for removing the extra material (if any).

The stamping production process may then output, *e*.*g*. directly and automatically, the CAM file, and perform the stamping process (*e*.*g*. automatically) based on the file. The stamping process may comprise stamping (*e*.*g*. punching) a portion of material to form the product as represented by the CAD file, that is possibly with the unfolded flanges and the extra material (if any). Where appropriate, the stamping process may then comprise cutting the extra material based on the machining production file and folding the flanges based on said specifications for folding the flanges, thereby folding the flanges on their g2-continuity length and giving a smooth aspect to the outer boundary of the part. In this latter case, the shape of the part once manufactured differ from its virtual counterpart as represented by the CAD model in that the extra material is removed and the flanges are folded, whereas the CAD model represents the part with the extra material and the flanges in an unfolded state.

The sketch-processing method, the 2D generating method, the 3D generating method and the fitting method are computer-implemented. This means that steps (or substantially all the steps) of each method are executed by at least one computer, or any system alike. Thus, steps of each method are performed by the computer, possibly fully automatically, or, semi-automatically. In examples, the triggering of at least some of the steps of the methods may be performed through user-computer interaction. The level of user-computer interaction required may depend on the level of automatism foreseen and put in balance with the need to implement user's wishes. In examples, this level may be user-defined and/or pre-defined.

For each method, a typical example of computer-implementation of the method is to perform the method with a system adapted for this purpose. The system may comprise a processor coupled to a memory and a graphical user interface (GUI), the memory having recorded thereon a computer program comprising instructions for performing the method. The memory may also store a database. The memory is any hardware adapted for such storage, possibly comprising several physical distinct parts (e.g., one for the program, and possibly one for the database).

A sketch is a computer object representing a continuous line defined in a 2D space. A sketch may comprise one or more sketch fragments each having a particular geometry (e.g., straight, curved or circular) and representing a respective portion of the line represented by the sketch. The extremities of the sketch fragments may be linked together to form the sketch. A sketch may consist of a set of successive points forming together the continuous line represented by the sketch. Each point may be a topological object located at a given position in the 2D space.

The set of successive points may represent a series of pixels. The sketch-processing may comprise displaying the series of pixels on a screen (e.g., via a graphical interface). The displaying may comprise determining a location of each pixel of the series on the screen according to the position of a corresponding point in the set of successive points forming together the line represented by the sketch. Alternatively, the set of successive points may represent one or more parametric curves. The set may comprise one or more subsets of points each representing a respective parametric curve. In that case, the displaying of the sketch may comprise deducing from each parametric curve a respective series of pixels (i.e., the series of pixels to be displayed on the screen). A parametric curve may be a spline defined with respect to the successive points of the subset representing the parametric curve. For example, the spline may be defined by a piecewise function in the 2D space consisting of a polynomial on each interval between each successive point of the subset. Each parametric curve may represent a respective sketch fragment of the sketch.

A sketch may be non-manifold or manifold.

A non-manifold sketch is a sketch that comprises at least one intra-sketch intersection, i.e., a sketch that comprises two distinct portions which intersect, the intersection dividing at least one of the two distinct portions into two distinct sub-portions. An intra-sketch intersection may comprise two points of the sketch that are located at a same position in the 2D space. The line of a sketch intersects on itself at a same position in the 2D space, which is the position of the intra-sketch intersection. A manifold sketch is a sketch that has no intra-sketch intersection.

A sketch may be closed or open (i.e., non-closed). A closed sketch is a sketch for which a starting point and an ending point of the sketch are located at a same position in the 2D space. The starting point may be the first point of the set of successive points forming together the line represented by the sketch and the ending point may be the last point of the set. An open sketch is a sketch for which the starting point is located at a position in the 2D space that differs from the position of the ending point.

The providing S10 of the one or more input sketches is now discussed. For each input sketch, the providing S10 of the input sketch may also be based on one of the following provision types. The providing S10 of an input sketch may be manual. For example, the providing S10 may comprise, for each input sketch, entering by the user each input sketch, e.g., by entering coordinates of each point in the input sketch via a graphical user interface (e.g., by a selection of coordinates for each point on a screen). Alternatively, the providing S10 of an input sketch may be semi-automatic. For example, the providing S10 may comprise detecting a drawing drawn by the user (e.g., such as on a tactile surface) and then, forming one or more input sketches based on the drawing drawn by the user. For example, the drawing may comprise performing one or more user interactions each delimiting a respective substantially continuous line (e.g., via a continuous slide on the screen) and the forming may comprise detecting the substantially continuous lines of the drawing and fitting one or more input sketches to the substantially continuous lines (e.g., a respective input sketch for each substantially continuous line). Alternatively yet, the providing S10 of an input sketch may be fully automatic. For example, the providing S10 may comprise providing an image (e.g., automatically capturing an image of a product or importing an image) and automatically forming one or more input sketches based on the provided image. The image may thus be a natural image or a photography. The forming may comprise detecting one or more edges of the image and the forming may comprise fitting a respective input sketch on each detected edge. The detecting of an edge in the image may comprise detecting a significant colour and/or contrast variation in the image (e.g. above a threshold). In examples, the one or more input sketches may be provided directly. For example, the sketch-processing method may comprise selecting the one or more input sketches (e.g., by a user in a database) and retrieving the selected one or more input sketches.

The one or more input sketches may comprise at least one pair of sketches that share at least two inter-sketch intersections. An inter-sketch intersection is an intersection between a pair of sketches (i.e., a pair of two sketches). Each of the two sketches of the pair comprises a point that is located at a same position in the 2D space, which is the point of the inter-sketch intersection.

The determining S20 of the one or more output sketches is now discussed.

The determining S20 comprises constructing S210 a set of manifold sketches. The constructing S210 of the set of manifold sketches may comprise processing each of the one or more input sketches. After each processing, the constructing S210 may comprise adding one or more manifold sketches in a provisional set (the provisional set having initially no sketch, and the constructing S210 comprising filling successively manifold sketches to the provisional set). After the processing of each input sketch, the constructing S210 may comprise defining the provisional set as the constructed set. The constructing S210 of the set of manifold sketches may comprise processing each of the one or more input sketches successively (one input sketch at a time) or in parallel (several input sketches at the same time). The processing of an input sketch may comprise detecting whether the input sketch is manifold, and, depending on whether the input sketch is manifold, determining one or more manifold sketches to be added in the provisional set and adding these determined one or more manifold sketches to the provisional set.

The processing of an input sketch may comprise automatically detecting whether the input sketch is manifold. For example, the detecting may comprise detecting whether or not the input sketch comprises at least one intra-sketch intersection. Then, the detecting may comprise determining that the input sketch is non-manifold when it is detected that the input sketch comprises at least one intra-sketch intersection, or that the input sketch is manifold otherwise.

The one or more manifold sketches to be added, after each processing, in the provisional set may depend on the input sketch, as discussed in the following.

When the input sketch is manifold, the constructing may directly add the input sketch in the provisional set. In that case, the manifold sketch that is added in the provisional set is thus the input sketch (the one which is detected as a manifold sketch). The provisional set may thus include each of the one or more input sketches that is manifold. Alternatively or additionally, the sketch-processing method may copy or transfer the input sketch to a memory space associated with the constructed set of manifold sketches.

When the input sketch is non-manifold, the constructing S210 may comprise determining S211 two or more respective manifold sketches based on the at least one intra-sketch intersection of the respective non-manifold input sketch. For example, the determining S211 may comprise splitting the non-manifold input sketch, thereby obtaining the two or more respective manifold sketches each corresponding to a respective portion of the input sketch (which portion is manifold, i.e., having no intra-sketch intersection). Then, the constructing may comprise adding the two or more respective manifold sketches in the set. For example, the constructing may comprise adding the identifier of each the two or more respective manifold sketches in the previously discussed list. Alternatively or additionally, the constructing may comprise copying or transferring the two or more respective manifold sketches to the memory space previously discussed.

The one or more output sketches include each closed sketch of the constructed set. For example, after each processing, the determining S20 may further comprise, for each manifold sketch added in the set, detecting whether the sketch is closed, and when the sketch is detected as closed, defining the sketch as one of the one or more output sketches. In that case, the determining S20 may comprise identifying the sketch as an output sketch (e.g., using a marker), such that the determining S20 may comprise retrieving the identified sketch at the end of the processing of the sketches. Alternatively, the sketch that is detected as closed may be copied or transferred in a memory space associated with the one or more output sketches.

After the constructing S210 of the set of manifold sketches, the determining S20 comprises combining S220 each pair of manifold sketches of the constructed set that share at least two intersections, so as to form one or more closed and manifold sketches. Each of the at least two intersections may be an inter-sketch intersection or an intra-sketch intersection. For example, when the one or more input sketches include a non-manifold sketch having two intra-sketch intersections, the at least two intersections may be the at least two intra-sketch intersections of the non-manifold sketch. Alternatively or additionally, when the one or more input sketches includes a pair of input sketches that share at least two inter-sketch intersections, the at least two intersections may be the at least two inter-sketch intersections shared by the pair of input sketches. Alternatively, the at least two intersections may also be a combination of at least one inter-sketch intersection and at least one intra-sketch intersection (i.e., at least one inter-sketch intersection shared by a pair of input sketches and at least one intra-sketch of a non-manifold input sketch). The determining S20 may comprise defining each of the one or more closed and manifold sketches as one of the one or more output sketches. In that case, the determining S20 may comprise identifying each closed and manifold sketch as an output sketch (e.g., using a marker), such that the determining S20 may comprise retrieving each of the one or more closed and manifold sketches at the end of the processing of the sketches. Alternatively, the sketch-processing method may copy the one or more closed and manifold sketches or transfer them in the memory space associated with the one or more output sketches.

For each combined pair, each of the at least two intersections may be an inter-sketch intersection (i.e., that is initially shared by a pair of input sketches) or may be an intra-sketch intersection of a non-manifold input sketch. In examples, the one or more input sketches may include at least one pair of sketches that share at least two inter-sketch intersections. In that case, for each of these at least one pair of sketches, the at least two intersections correspond to the at least two inter-sketch intersections that are shared by the pair of sketches. Alternatively or additionally, the one or more input sketches may include at least one non-manifold sketch. In that case, for each of the at least one non-manifold sketch that has at least two intra-sketch intersections, the at least two intersections may correspond to the at least two intra-sketch intersections of the at least one non-manifold sketch when the combined pair is a pair of the two or more respective manifold sketches determined based on the non-manifold sketch.

The determining S211 of two or more respective manifold sketches for a non-manifold input sketch may comprise recursively splitting the non-manifold input sketch. Each input sketch may be oriented. The recursive splitting may comprise browsing the non-manifold input sketch. Browsing the sketch may comprise successively (i.e., one after the other) reading, by the computer, each of point of the set of successive points forming the sketch line. The orientation of the sketch may give a direction for the browsing (i.e., the browsing may be according to / follow the orientation of the sketch).

During the browsing, the recursive splitting may comprise encountering a point of the intra-sketch intersection. For example, the reading of the point may comprise determining that the point belongs to the intra-sketch intersection. At this time, the recursive splitting may comprise splitting the respective non-manifold input sketch at the encountered point of the intra-sketch intersection, thereby forming two sketch pieces. Each of the formed two sketch pieces may correspond to a respective portion (or to several respective portions) of the respective non-manifold input sketch delimited by the encountered point. For example, the splitting may comprise identifying as a first sketch piece the portion of the respective non-manifold input sketch comprising the points of the respective non-manifold input sketch that have been already read, and identifying the rest of the respective non-manifold input sketch (i.e., the portion comprising other points that have not been read) as a second sketch piece. After the splitting of the two sketch pieces, the sketch-processing method may comprise processing each sketch piece independently (e.g., successively or in parallel). The processing of a sketch piece may comprise, determining whether the sketch piece has no intra-sketch intersection. For example, the processing may comprise browsing the sketch piece in order to determine whether one of the points is read as an intra-sketch intersection, and determining that the sketch piece is non-manifold when one of the points is read as an intra-sketch intersection. Then, the processing may comprise, if the sketch piece has no intra-sketch intersection, determining the sketch piece as one of the two or more respective manifold sketches. Otherwise, if the sketch piece has at least one intra-sketch intersection, the processing may comprise repeating the recursive splitting with the sketch piece. The repeating of the recursive splitting may comprise splitting the sketch piece, thereby forming two new sketch pieces from the sketch piece, and independently processing each of the two new sketch pieces as previously discussed (i.e., determining whether the new sketch piece is manifold, and splitting each new sketch piece that is non-manifold).

The recursive splitting therefore allows efficiently obtaining the two or more manifold sketches from the respective non-manifold sketch. In particular, the recursive slicing improves the efficiency of splitting by allowing for a simplification of the assignment of the sketch pieces from each splitting, since each performed splitting only splits into two sketch pieces, and thus it is straightforward to determine to which new sketch piece each sliced piece belongs.

In examples, the one or more input sketches comprise one or more closed non-manifold input sketch. In that case, for each closed non-manifold input sketch, the splitting of the closed non-manifold input sketch may comprises browsing the closed non-manifold input sketch starting from the point of the intra-sketch intersection (the point encountered during the browsing of the non-manifold input sketch). For example, the browsing may continue to read the points connected after the encountered point of the intra-sketch intersection. Then, the splitting may comprise encountering another point of the intra-sketch intersection. The another point belongs to the same intra-sketch intersection as the point previously encountered point. The intra-sketch comprises at least two points, and the point previously encountered is a first one of these at least two points and the another point encountered is a second one of these at least two points. After the encountering of the another point, the splitting may comprise extracting the sketch piece from the closed non-manifold input sketch between the point and the another point of the intra-sketch intersection. The extracting may comprise splitting the closed non-manifold input sketch at the encountered another point, thereby forming a new closed sketch piece between the point encountered first and the another point encountered after the point encountered first (the formed new closed sketch piece being the extracted sketch piece) and a remaining sketch piece of the closed non-manifold input sketch (i.e., the closed non-manifold input sketch without the formed new closed sketch piece sketch piece). The splitting may comprise defining the extracted sketch piece as one of the two sketch pieces into which the non-manifold input sketch is split, and defining the remaining sketch piece as another one of the two sketch pieces. Because the non-manifold is closed, the sketch-processing method may define the extracted sketch piece and the remaining sketch piece as closed, for example by connecting, for each sketch piece, the point of the intra-sketch intersection to the another point of the intra-sketch intersection.

In examples, the one or more input sketches may comprise one or more open non-manifold input sketch. In that case, for each open respective non-manifold input sketch, the splitting of the respective non-manifold input sketch may comprises browsing the non-manifold input sketch starting from the point of the intra-sketch intersection (the point encountered during the browsing of the non-manifold input sketch). For example, the browsing may continue to read the points connected after the encountered point of the intra-sketch intersection. Then, the splitting may comprise encountering another point of the intra-sketch intersection. The intra-sketch intersection to which the another point belongs is the same as the intra-sketch intersection of the point encountered first (the point and the another point belong to the same intra-sketch intersection). After the encountering of the another point, the splitting may comprise extracting the sketch piece from the non-manifold input sketch between the point and the another point of the intra-sketch intersection. The sketch piece is extracted between two points of a same intra-sketch intersection. The extracted sketch piece is thus closed and may therefore be defined by the sketch-processing method as one of the two sketch pieces into which the non-manifold input sketch is split. Because the non-manifold input sketch is open, the remaining of the sketch (i.e., the sketch without the extracted part) consists in two remaining sketch pieces, and each of the two remaining sketch pieces is open. After the extracting, the splitting may comprise joining the remaining two sketch pieces, thereby forming the another one of the two sketch pieces. The jointing may comprise connecting an extremity of one of the two sketch pieces to an extremity of the another one of the two sketch pieces. For each of the two sketch pieces, the extremity is the extremity that is close to the point of intersection.

In examples, each pair of manifold sketches combined in the combining step S220 may comprise a first manifold sketch and a second manifold sketch. The forming of the one or more closed sketches may consider each pair of successive intersections between the first manifold sketch and the second manifold sketch along the second manifold sketch. For each pair of successive intersections, the forming may comprise extracting the portion of the second manifold sketch delimited by these two successive intersections. After the extracting, the forming may comprise splitting the first manifold sketch between these two successive intersections, thereby obtaining one or two segments of the first manifold sketch. After the splitting, the forming may comprise recombining each segment of the first manifold sketch with the extracted portion of the second manifold sketch, thereby obtaining one or two closed and manifold sketches. Considering each pair of successive intersections along the second manifold sketch ensures that the obtained one or more closed sketches are manifold.

In examples, the set obtained by the constructing S210 consists of unique sketches. For example, the constructing S210 may comprise, prior to the defining of the provisional set as the constructed set, detecting at least one pair of sketches in the provisional set that are equivalent, and removing one of the pair of sketches in the provisional set.

In examples, the providing S10 of the one or more input sketches may comprises obtaining a set of sketch fragments. The obtaining of the set of sketch fragments may be manual. For example, each sketch fragment may be entered by the user (e.g., by entering coordinates of two extremities of the sketch fragment). Alternatively, obtaining of the set of sketch fragments may be semi-automatic. For example, the obtaining may comprise detecting a drawing drawn by the user (e.g., such as on a tactile surface) and then, forming one or more sketch fragments based on the drawing drawn by the user. For example, the drawing may comprise performing one or more user interactions each delimiting a respective substantially continuous and straight line (e.g., via a continuous and straight slide on the screen) and the forming may comprise detecting the substantially continuous and straight lines of the drawing and fitting one or more sketch fragment to the substantially continuous and straight lines (e.g., a respective sketch fragment for each substantially continuous and straight line). Alternatively yet, obtaining of the set of sketch fragments may be fully automatic. For example, the obtaining may comprise providing an image (e.g., automatically capturing an image of a product or importing an image) and automatically forming one or more sketch fragments based on the provided image. The image may thus be a natural image or a photography. The forming of the one or more sketch fragments may comprise detecting one or more straight edges of the image and fitting a respective sketch fragment on each detected edge. The detecting of a straight edge in the image may comprise detecting a significant colour and/or contrast variation in the image (e.g. above a threshold) occurring in a substantially straight portion. The obtaining of the set of sketch fragments may be based on a combination of one or more of these provision types (manual, semi-automatic and/or fully automatic).

After the obtaining of the set of sketch fragments, the providing S10 comprise generating one or more aggregations of connected sketch fragments from the obtained set of sketch fragments. Each of the one or more aggregations may be one of the one or more input sketches. The generating of the one or more aggregations of connected sketch fragments may comprise, for each sketch fragment of the set, constructing one or more sketches containing the sketch fragment. For each constructed sketch, the constructing of the sketch may comprise successively connecting sketch fragments to the sketch fragment initially considered until no other sketch fragment from the set is connectable to the constructed sketch. For example, each sketch fragment may have two extremities, and two sketch fragments may be connectable when the extremity of one is distant from the extremity of the other one below a predetermined threshold. No other sketch fragment from the set is connectable to the constructed sketch when none of the sketches from the set has an extremity that is distant from one of the extremities of the constructed sketch (i.e., that is below the predetermined threshold).

In examples, the set obtained by the constructing S210 may consists of closed sketches. For example, the constructing S210 may comprise, prior to the defining of the provisional set as the constructed set, detecting at least one sketch in the provisional set that is open, and, for each of the detected open sketch, closing or removing the detected open sketch in the provisional set. The closing of an open sketch may comprise connecting the two extremities of the open sketch.

An example of implementation of the sketch-processing method is now discussed in more details.

The sketch-processing method takes as input a set of elementary sketch fragments (e.g., geometric lines, circle arcs and/or splines), and outputs a set of closed and manifold sketches, wherein each closed and manifold sketch is a connected combination of the elementary sketch fragments of the set taken as input, or of sub-fragments of these sketch fragments. In order to construct the outputted set of closed and manifold sketches, the sketch-processing method comprises, firstly, generating a set of maximal combinations of connected sketch fragments (i.e., aggregations of connected sketch fragments, each aggregation being a sketch). Secondly, the sketch-processing method comprises, for each of those generated sketches, searching for intersections with others sketches or with itself. When appropriate, the sketch-processing method may comprise splitting and combining each intersected sketch with the intersecting sketch to generate closed sketches. The generation of closed manifold sketches may comprise deriving 2D shapes bounded by the generated sketches and/or 3D profile-based volumes using the generated sketches as support (e.g., pads or revolves).

The sketch-processing method may be thus used to automatically and efficiently generate 2D or 3D shapes relevant to a set of elementary sketch fragments, which is useful for instance in tasks such as shape reconstruction or detection from images or drawings.

The sketch-processing method allows generating all possible closed and manifold sketches constructed by combination and splitting of elementary sketch fragments. The sketch-processing method therefore allows the efficient construction of both 2D shapes and 3D profile-based volumes (e.g. extruded volumes) from sketches either provided by a user or automatically inferred from a drawing or picture.

Notably, the sketch-processing method provides an efficient way to generate all relevant closed and manifold sketches from any support allowing the extraction of sketches (e.g., drawings or images), which allows an immediate generation of 2D shapes bounded by these sketches, or 3D profile-based volumes (e.g., extrusions or revolutions) supported by them.

In contrary to deep-learning based methods, no data is required. This also means that the sketch-processing method does not suffer from a lack of robustness to unseen data types. Indeed, the sketch-processing method allows generating sketches as combinations of any elementary types given in input (such as line segments, arcs or splines). This means that the sketch-processing method is not limited to specific categories of generated sketches. The sketch-processing method also allows providing sketches which are accurate (i.e., fit accurately to the input), and which are easily and intuitively editable.

Moreover, the generated set of closed and manifold sketches is exhaustive. Indeed, the sketch-processing method is not limited to the generation of a unique sketch but generates all relevant closed manifold sketches. Furthermore, the sketch-processing method allows handling the generation of overlapping (and even intersecting) sketches. Additionally, the sketch-processing method is based on only one hyper-parameter, which is a distance tolerance for the connection of sketch fragments (the predetermined threshold). This unique hyper-parameter may be easily derived from the analysis of the input and does not heavily define the generated outputs. The sketch-processing method also immediately allows the generation of both 2D and 3D shapes.

Another advantage is that the sketch-processing method preserves the orientation of the sketch fragments. The preservation of the orientation improves the inference of the addition or subtraction property inference of generated volumes.

The inputs of the sketch-processing method are now discussed. The sketch-processing method takes as input a set of elementary sketch fragments. Each of the sketch fragments may possibly be oriented. The sketch fragments (or portions of them) form the building blocks of the generated closed and manifold sketches. The sketch fragments may be line segments, circle arcs or open or closed curves (e.g., splines). The sketch fragments may be obtained in different ways. In examples, the sketch fragments may be provided directly by a user (e.g., as the result of the use of a 2D drawing software). In other examples, the sketch fragments may be provided by fitting curves and/or by detecting specific geometric curves (such as lines or circles) on a drawing, automatically-detected edges on an image (e.g. using a Canny edge detector) and/or manually traced edges on an image. In other examples, the sketch fragments may be provided by fitting oriented curves to the projection of profile-based approximate surfaces (e.g., meshes representing extrusion surfaces), such as surfaces detected on 3D scans.

With reference to FIG.s 2 and 3, the providing S10 of input sketches is now discussed. Given an input set of sketch fragments, the sketch-processing method generates all maximal combinations of connected fragments. Maximal means that no other sketch fragment is connectable to the combination. For each sketch fragment, the sketch-processing method constructs every connected sketch containing this sketch fragment by successively exploring and combining all connectable fragments until either none can be added, or the current sketch is closed. The generated sketches may thus be either open or closed, and eventually non-manifold (see the combinations illustrated in FIG.s 1 and 2). Furthermore, when the sketch fragments provided as input are not oriented, the sketch-processing method may comprise orienting the generated combinations, for example by choosing an orientation for one of their sketch fragments and propagating this orientation when connecting with others.

The sketch-processing method may further comprise relaxing a connection condition. For example, two sketch fragments can be combined when the distance between the extremities of the two sketch fragments to be connected is smaller than a given tolerance. Relaxing the connection condition allows adding robustness to an eventual noise in the input sketch fragments. This tolerance may be defined for instance according to a noise level and a scale of sketches, or by analyzing the distribution of distances between sketch extremities.

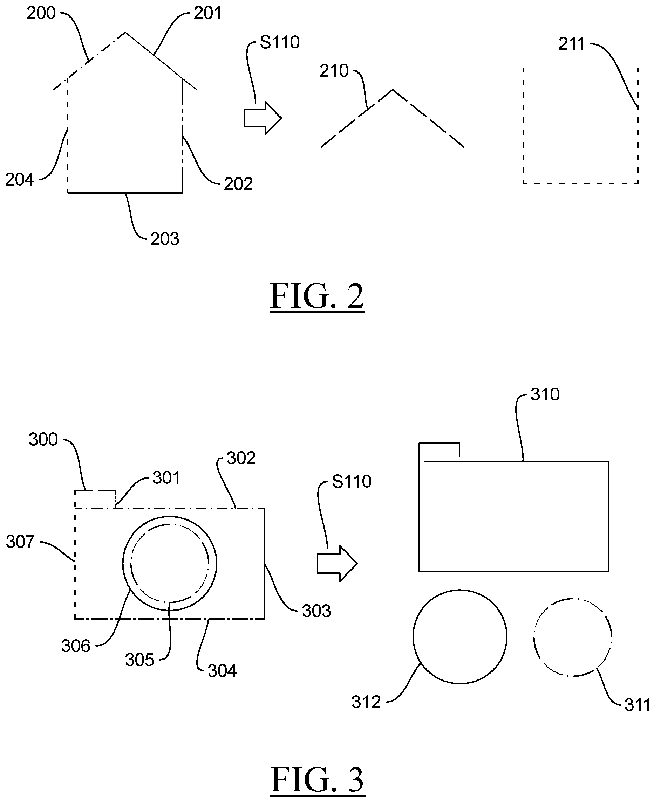

FIG. 2 illustrates a first example of the providing S10 of the one or more input sketches. The providing S10 comprises obtaining a set of sketch fragments 200, 201, 202, 203 and 204 (the sketch fragments being distinguished on the figure using different types of dotted lines). The providing S10 further comprises generating S110 one or more aggregations of connected sketch fragments from the obtained set of sketch fragments, thereby obtaining the one or more input sketches 210, 211. The generating S110 comprises generating a first aggregation based on the sketch fragments 200 and 201. The first aggregation is generated by connecting the extremities of the sketch fragments 200 and 201. The first aggregation provides the sketch 210, which is open and manifold. The generating S110 further comprises generating a second aggregation based on the sketch fragments 202, 203 and 204 by connecting the extremities of these sketch fragments 202, 203 and 204. The second aggregation provides the sketch 211, which is also open and manifold.

FIG. 3 illustrates a second example of the providing S10 of the one or more input sketches. The providing S10 comprises obtaining a set of sketch fragments 300, 301, 302, 303, 304, 305, 306 and 307. The providing S10 further comprises generating S110 one or more aggregations of connected sketch fragments from the obtained set of sketch fragments, thereby obtaining the one or more input sketches 310, 311, 312. The generating S110 comprises generating a first aggregation based on the sketch fragments 300, 301, 302, 303, 304 and 307. The first aggregation provides the sketch 310, which is closed and non-manifold. The generating S110 comprises generating a second aggregation 311 (respectively a third aggregation 312) based on the sketch fragment 305 (respectively the sketch fragment 306).

With reference to FIG.s 4 and 5, the determining of the one or more closed and manifold output sketches is now discussed. The set of aggregations of connected sketch fragments (i.e., the set of input sketches) comprises both closed and open sketches. Given this set of input sketches, the sketch-processing method comprises generating all relevant closed and manifold sketches. Indeed, not only may one of the input sketches be non-manifold, but also the set of input sketches is limited in that it does not comprise combinations of input sketch fragments. To address these limitations, the sketch-processing method provides an efficient two steps sketch splitting processing comprising two main steps that are discussed in following paragraphs with reference to FIG.s 4 and 5.

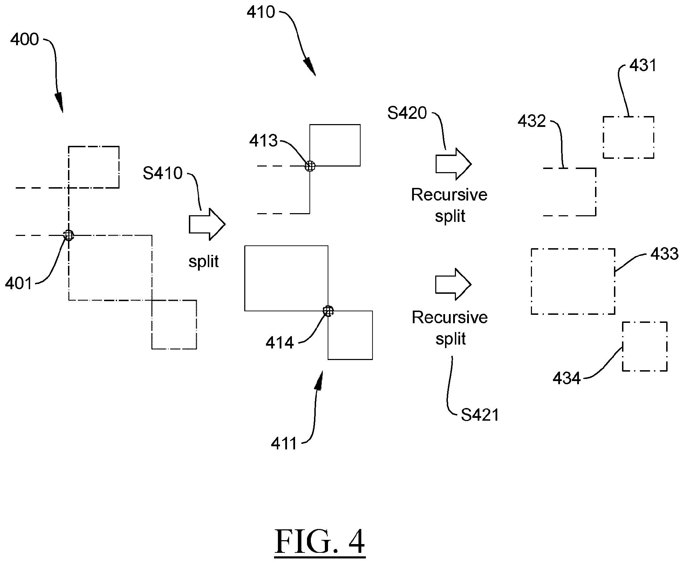

In a first main step illustrated in FIG. 4, the sketch-processing method processes each input sketch 400 and constructs, from the input sketch 400 (which is non-manifold), a set of manifold sketches 431, 432, 433 and 434. The constructing starts with the set of potentially non-manifold aggregated sketches. Firstly, the constructing splits all non-manifold sketches into manifold (open or closed) sub-sketches. The splitting comprises, for each aggregated sketch, a first step of searching for auto-intersections 401 (between one or multiple of its fragments). In a second step, if the aggregated sketch auto-intersects at least once, the sketch-processing method indifferently picks one of the intersection points. It the sketch is closed, the sketch-processing method splits (e.g., the split S413 of the sketch 411) the aggregated sketch at the intersection point in two closed sub-sketches. The splitting comprises browsing the sketch and starting from the intersection point on any of the two fragments containing it, following the sketch until reaching the intersection point again and extracting one closed sub-sketch. Then, splitting comprises defining the remaining sub-sketch as a second closed sub-sketch. If the sketch is open, the sketch-processing method splits (e.g., the split S410 of the sketch 400 or the split S420 of the sketch 410) the aggregated sketch at the intersection point in one closed and one open sub-sketches. The splitting comprises browsing the aggregated sketch and starting from the intersection point on the first fragment containing it, following the sketch until reaching the intersection point again and extracting one closed sub-sketch. In that case, two open sub-sketches remain, which are respectively ending and starting at the intersection point. The sketch-processing method may join these two remaining sub-sketches to form a second open sub-sketch. Then, the sketch-processing method may recursively apply the search for auto-intersections (such as 413 and 414) and splitting (such as S420 and S421 after S410) if an auto-intersection is detected with the two generated sketches.

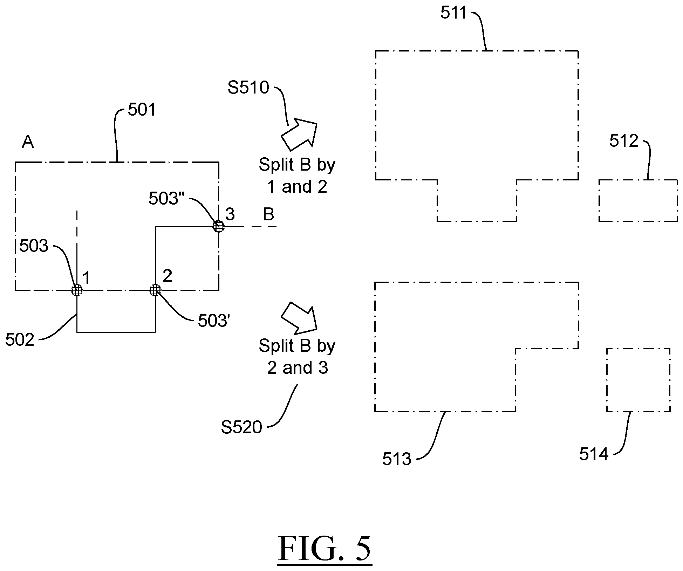

In a second main step illustrated in FIG. 5, the sketch-processing method, from the set of manifold sketches, then generates all possible closed (and still manifold) combination of sketches. The generation comprises, for each ordered pair of sketches "A" 501 and "B" 502 (A differing from B), searching for intersections 503, 503', 503" between A and B. If there are at least two intersections (there is three intersections in this example 503, 503' and 503"), for each successive (with regards to B's orientation) pair of intersection points, the sketch-processing method comprise extracting the sub-sketch of B between those two points (i.e., a first sub-sketch between 503 and 503' and a second sub-sketch between 503' and 503"). In this example, the sketch-processing method considers first the pair 503, 503', and then the pair 503', 503". In the case A is open (not the case in this example), the sketch-processing method extracts its sub-sketch between the two intersection points, generating one open sub-sketch by starting from any of the two points, and following the sketch until reaching either the other point or its end. If the other point is reached, the sketch-processing method determines the desired sub-sketch. Otherwise, the sketch-processing method repeats the procedure starting from the other point. In the case A is closed (as in this example of FIG. 5), the sketch-processing method splits B (S510 and S520) at the two intersection points (respectively 503 and 503' for S510 and 503' and 503" for S520), thereby generating two open sub-sketches (a larger and a smaller sub-sketch). The splitting comprises starting from any of the two points, following the sketch until the other is reached and generating one open sub-sketch. The remaining sub-sketch is another open sub-sketch joining both points. Then, the sketch-processing method combines the sub-sketch(es) of A with the sub-sketch of B's and generating one or two closed manifold sketches. The sketch-processing method may reverse a sub-sketch of B when its orientation is not coherent with a sub-sketch of A (i.e. the sub-sketch of B and the sub-sketch of A both start and end at the same points, instead of the opposite). Since the two intersection points are successive, the sub-sketch of B does not intersect with the sub-sketch(es) of A. In this example, for the first pair of intersections 503 and 503', the combination of the larger sub-sketch of A with the sub-sketch of B between 503 and 503' provides the sketch 511, and the combination of the smaller sub-sketch of A with the sub-sketch of B between 503 and 503' provides the sketch 512. For the second pair of intersections 503' and 503", the combination of the larger sub-sketch of A with the sub-sketch of B between 503' and 503" provides the sketch 513, and the combination of the smaller sub-sketch of A with the sub-sketch of B between 503' and 503" provides the sketch 514.

In examples, the sketch-processing method may further ensure the generation of unique sketches. The sketch-processing method may comprise a post-processing step to detect and remove duplicate sketches. The sketch-processing method may uniquely define split sketch fragments by their originating sketch fragment and their extremities.

The sketch-processing method allows generating multiple closed manifold sketches for a single aggregated sketch, ensuring that all possible closings of that sketch are generated. Splitting the already aggregated sketches instead of the initial elementary sketch fragments allows for an overall more efficient procedure. In particular, aggregating sketch fragments prior to splitting intersecting sketch fragments allows reducing the number of fragments to be aggregated, and thus allows reducing the complexity of the aggregation step (in particular with respect to performing the splitting of intersecting sketch fragments prior to aggregating them).

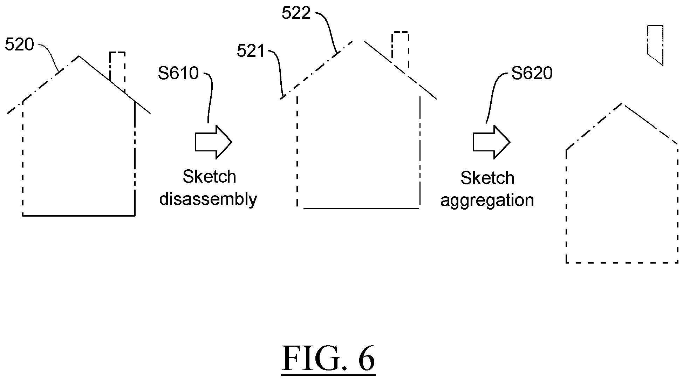

FIG. 6 illustrates an example of complexity when intersecting sketch fragments are split before being aggregated. The sketch-processing method splits the sketches independently for each considered sketch, which ensures a minimal number of sketch fragment splitting per generated sketch. Indeed, splitting intersecting sketch fragments implies potentially multiple splits for a same fragment. In the example of FIG. 6, the sketch fragment 520 is split in two sketch fragments 521, 522, which increase the complexity when intersecting sketch fragments are split S610 prior to be aggregated S620. Multiple splits per fragment not only implies more complex generated sketches (as in sketches with a larger number of smaller fragments, some of which could be grouped), but also an even less efficient aggregation step, as even more sketch fragments need to be considered (as illustrated in FIG. 6). The sketch-processing method allows reducing the complexity and thus improving the efficiency by aggregating sketch fragments prior to splitting them.

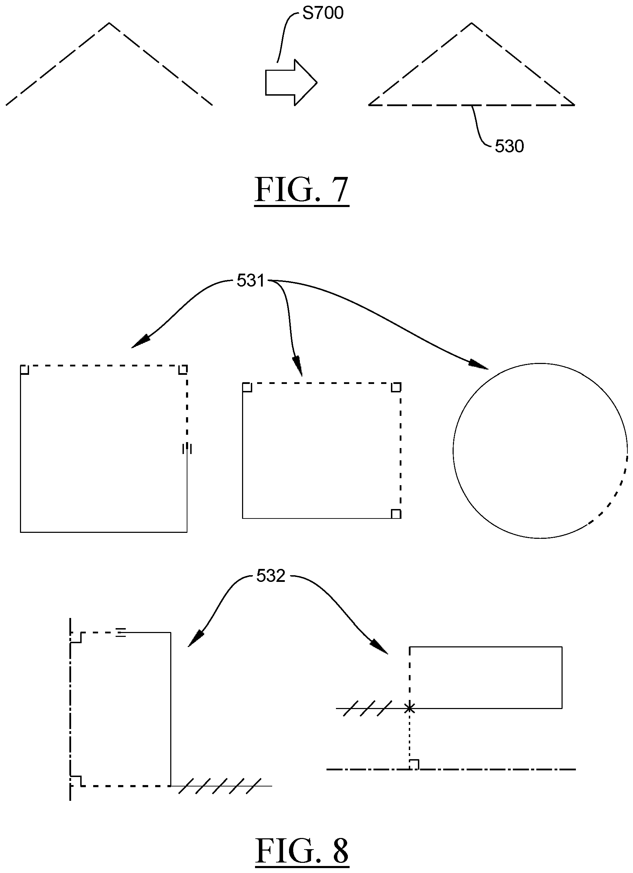

FIG. 7 illustrates an example of the closing S700 of an open sketch. The sketch-processing method may comprise closing the generated open sketches to add robustness. The closing of the generated open sketches may use well-chosen fictive sketch fragments (e.g. a single segment 530, as illustrated in FIG. 7). For example, the sketch-processing method may fictively close aggregated sketches which could not be closed by sketch disassembly. This ensures that all input sketch fragments are represented in the generated closed manifold sketches. Alternatively or additionally, the sketch-processing method may fictively close all open aggregated sketches, even when they already led to closed manifold sketches by sketch disassembly. This ensures more exhaustiveness in the generated sketches. More examples of fictive sketch closing are illustrated in FIG. 8, which illustrates three examples of extrude profile fictive closing 531 and two examples of revolve profile fictive closing 532.

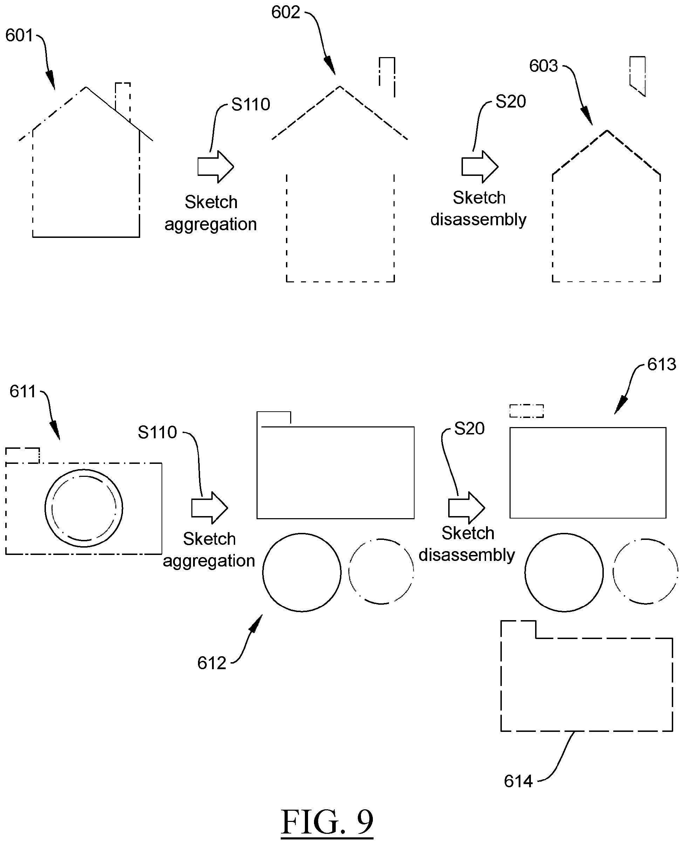

FIG. 9 illustrates two examples of sketch-processing by the sketch-processing method. In the first example, the sketch-processing method comprises providing S10 three input sketches (the input sketches 602). The providing S10 comprise obtaining a set of sketch fragments 601 and generating S110 three aggregations of connected sketch fragments from the obtained set of sketch fragments (which are the three input sketches 602). Then, the sketch-processing method comprises determining S20 two output sketches 603 from the three input sketches 602. Each of the output sketches 603 is closed and manifold. In the second example, the sketch-processing method comprises providing S10 three input sketches (the input sketches 612). The providing S10 comprise obtaining a set of sketch fragments 611 and generating S110 three aggregations of connected sketch fragments from the obtained set of sketch fragments (which are the three input sketches 611). Then, the sketch-processing method comprises determining S20 three output sketches 613 from the three input sketches 612. Each of the output sketches 613 is closed and manifold. In examples, the output sketches may also include the sketch 614. The determining S20 comprises constructing S210 a set of manifold sketches from the input sketches and combining S220 each pair of manifold sketches.

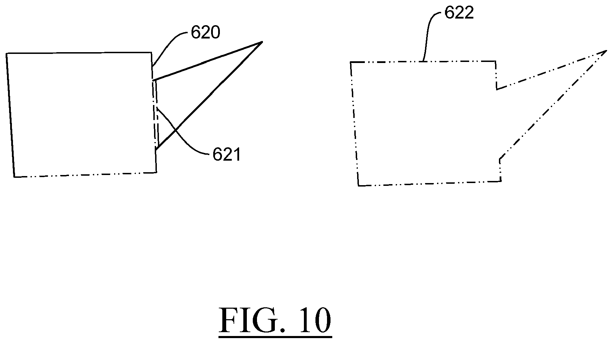

FIG. 10 illustrates an example of sketch fragments comprising a merged sketch portion between the sketch fragment 620 and the sketch fragment 621. In that case, the combining of pairs of sketches S220 may comprise considering the merged sketch portion as intersecting at their extremities (from the smaller sketch 621 in this example). Merged sketch portions may also be considered similarly after the aggregation step, which may provide sets of sketches sharing a fragment, thus of the same size. Then, when recombining new sketches, the sketch-processing method may detect and exclude the recombined sketches with a confused sketch fragment. This allows generating relevant sketches, such as the sketch 622 (which is also illustrated in FIG. 10 and which goes all the way around in this example), without generating degenerate sketches (e.g., the sketch 621, which is a confused portion of the sketch 620, which is non-manifold).

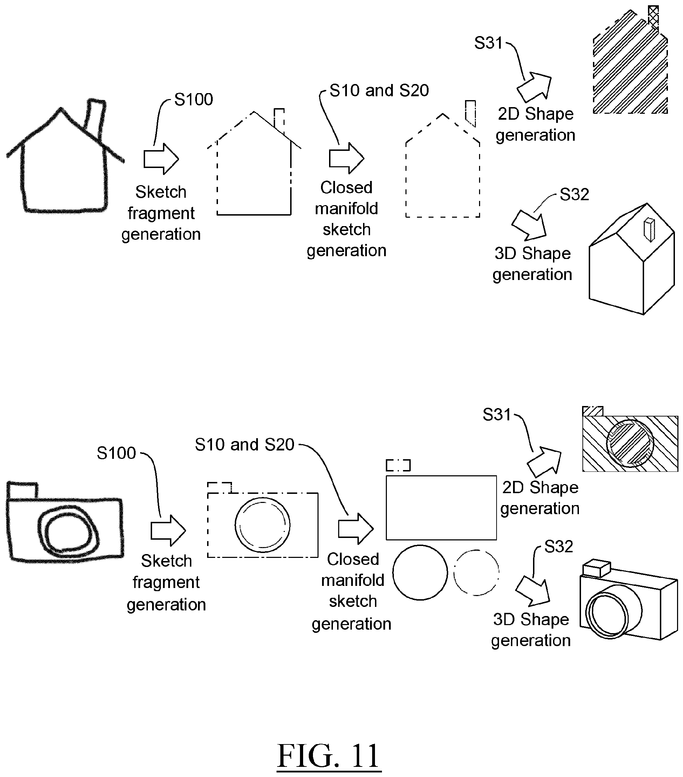

FIG. 11 illustrates two examples of the 2D and 3D generating methods. In the first example, a drawing of a house is taken as input. In the second example, a drawing of a camera is taken as input. In both examples, the 2D and 3D generating methods comprises generating S100 sketch fragments from the drawing. The generating S100 may comprise fitting line segments, circle arcs and splines to the drawing to generate the input sketch fragments. In other examples, when a picture is provided, the generating S100 may comprise detecting edges in the picture (e.g. using a Canny edge detector).

The 2D generating method is now discussed. The 2D generating method comprise, once a set of closed and manifold sketches have been generated, automatically generating S31 2D surfaces (bounded by those sketches) fitting to the input sketch fragments. Each of the 2D surface may be bounded by a respective sketch. It means that, in a 2D plane, the sketch may delimit the boundary of the 2D surface. The generating of 2D surfaces may comprises selecting one or more sketches among the outputted sketches, and, for each selected sketch, generating a respective 2D surface. In this figure, only the selected sketches among the outputted sketches are illustrated. This means that the outputted sketches may comprise other sketches not represented in the figure (e.g., the output sketch 614 represented in FIG. 9). Then, the 2D generating method comprises forming a 2D shape based on the generated 2D surfaces. For example, the forming of the 2D shape may comprise joining together the 2D surfaces. The 2D generating method thus allows the fitting of a 2D shape to the provided drawing (or picture in other examples). In other examples, using a similar pipeline, the 2D generating method may have for application the detection of specific 2D shapes (e.g. squares, circles, or the like) in drawings and pictures, using specific detection criteria (e.g. respectively 4 orthogonal same size segments, one closed circle, or the like) on the generated sketches.

The 3D generating method is now discussed. The 3D generating method allows an immediate generation S32 of a relevant 3D shape fitting to the input sketch fragments (the drawing as in this example or a provided picture in other examples).

The fitting to the input sketch fragments may comprise generating extrusion or revolution volumes using the closed and manifold sketches as support. The generation S32 may further comprise performing manual user input, or another specific detection pipeline, in order to precise the limits of the profile-based volume.

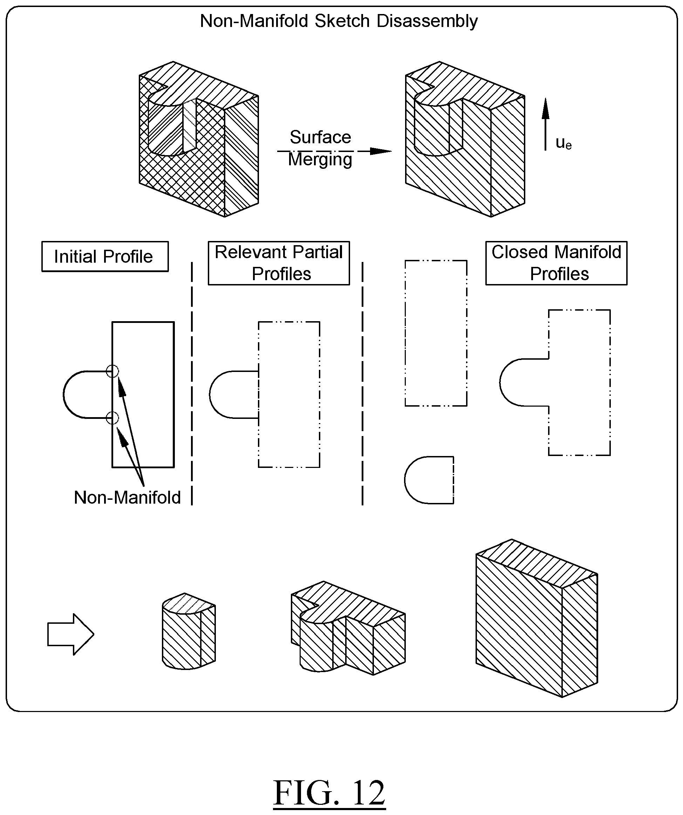

FIG. 12 illustrates an example of the sketch-processing method for fitting profile-based volumes to an approximate surface (referred to as the fitting method). The fitting method has for application the robust fitting of profile-based volumes (e.g. extruded volumes) to approximate surfaces (e.g. scan mesh). After segmenting the approximate surface into relevant surface portions, the fitting method comprises detecting extrusion directions and the corresponding surface portions by successive merging of compatible surface portions. The fitting method further comprises generating sketch fragments by projection of those surface portions onto a plane orthonormal to the extrusion direction. The sketch aggregation and disassembly pipeline of the fitting method allows the generation of all relevant closed manifold sketches to each extrusion direction as well as the subsequent 3D extrusion volumes generation. Indeed, the sketch disassembly improves the recovering of all relevant closed manifold sketches (and therefore the corresponding 3D extrusion volumes). Notably, if multiple extrusion volumes in a same direction are adjacent, some of the sketch fragments necessary to the generation of closed manifold sketches risk being strictly included in others (as illustrated in FIG. 12). Furthermore, because the determining of the one or more output sketches maintains sketch orientations, the fitting method may comprise inferring an additive or subtractive (e.g. pad or pocket) characteristic of the corresponding volume.

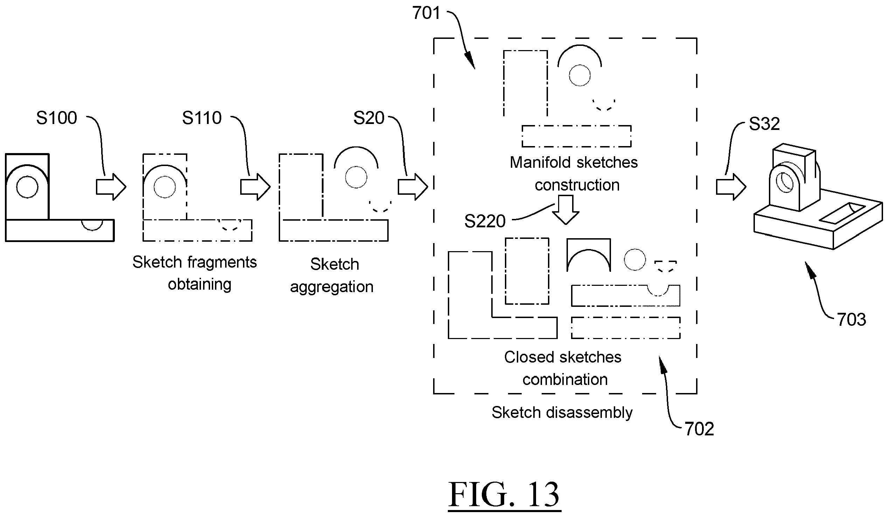

FIG. 13 illustrates an example of the 3D generating method. The 3D generating method comprises obtaining S100 sketch fragments from an image. In this example, the image is an orthogonal 3D view of an object along one of its main axes. The 3D generating method further comprises generating S110 aggregations of connected sketch fragments from the obtained set of sketch fragments (the aggregations of connected sketch fragments are the input sketches). The 3D generating method further comprises determining S20 output sketches 612 from the input sketches, each output sketch being closed and manifold. The determining S20 of the output sketches comprises constructing a set of manifold sketches 612 from the input sketches. The determining S20 further comprise combining S220 each pair of manifold sketches of the constructed set that share at least two intersections, so as to form the closed and manifold sketches 702. Then, the generating method further comprises generating 3D portions based on the outputted closed and manifold sketches 702 (each 3D portion being an extrusion or a revolution of one of the outputted one or more closed and manifold sketches) and forming a 3D shape 703 based on the generated 3D portions.

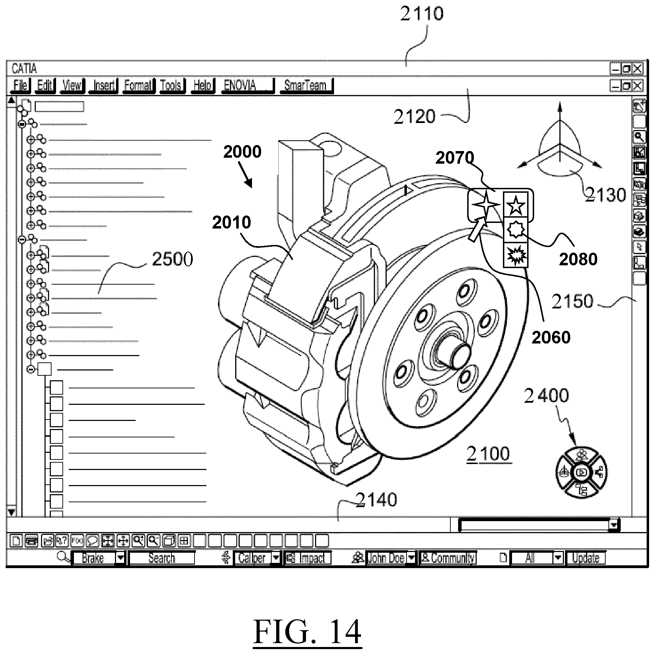

FIG. 14 shows an example of the GUI of the system, wherein the system is a CAD system.

The GUI 2100 may be a typical CAD-like interface, having standard menu bars 2110, 2120, as well as bottom and side toolbars 2140, 2150. Such menu- and toolbars contain a set of user-selectable icons, each icon being associated with one or more operations or functions, as known in the art. Some of these icons are associated with software tools, adapted for editing and/or working on the 3D modeled object 2000 displayed in the GUI 2100. The software tools may be grouped into workbenches. Each workbench comprises a subset of software tools. In particular, one of the workbenches is an edition workbench, suitable for editing geometrical features of the modeled product 2000. In operation, a designer may for example pre-select a part of the object 2000 and then initiate an operation (e.g. change the dimension, color, etc.) or edit geometrical constraints by selecting an appropriate icon. For example, typical CAD operations are the modeling of the punching or the folding of the 3D modeled object displayed on the screen. The GUI may for example display data 2500 related to the displayed product 2000. In the example of the figure, the data 2500, displayed as a "feature tree", and their 3D representation 2000 pertain to a brake assembly including brake caliper and disc. The GUI may further show various types of graphic tools 2130, 2070, 2080 for example for facilitating 3D orientation of the object, for triggering a simulation of an operation of an edited product or render various attributes of the displayed product 2000. A cursor 2060 may be controlled by a haptic device to allow the user to interact with the graphic tools.

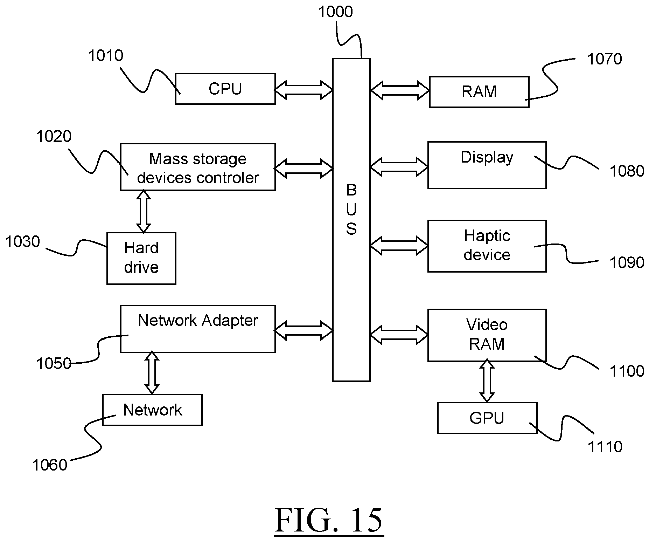

FIG. 15 shows an example of the system, wherein the system is a client computer system, e.g. a workstation of a user.

The client computer of the example comprises a central processing unit (CPU) 1010 connected to an internal communication BUS 1000, a random access memory (RAM) 1070 also connected to the BUS. The client computer is further provided with a graphical processing unit (GPU) 1110 which is associated with a video random access memory 1100 connected to the BUS. Video RAM 1100 is also known in the art as frame buffer. A mass storage device controller 1020 manages accesses to a mass memory device, such as hard drive 1030. Mass memory devices suitable for tangibly embodying computer program instructions and data include all forms of nonvolatile memory, including by way of example semiconductor memory devices, such as EPROM, EEPROM, and flash memory devices; magnetic disks such as internal hard disks and removable disks; magneto-optical disks. Any of the foregoing may be supplemented by, or incorporated in, specially designed ASICs (application-specific integrated circuits). A network adapter 1050 manages accesses to a network 1060. The client computer may also include a haptic device 1090 such as cursor control device, a keyboard or the like. A cursor control device is used in the client computer to permit the user to selectively position a cursor at any desired location on display 1080. In addition, the cursor control device allows the user to select various commands, and input control signals. The cursor control device includes a number of signal generation devices for input control signals to system. Typically, a cursor control device may be a mouse, the button of the mouse being used to generate the signals. Alternatively or additionally, the client computer system may comprise a sensitive pad, and/or a sensitive screen.

The computer program may comprise instructions executable by a computer, the instructions comprising means for causing the above system to perform the sketch-processing method, the 2D generating method, the 3D generating method and/or the fitting method. The program may be recordable on any data storage medium, including the memory of the system. The program may for example be implemented in digital electronic circuitry, or in computer hardware, firmware, software, or in combinations of them. The program may be implemented as an apparatus, for example a product tangibly embodied in a machine-readable storage device for execution by a programmable processor. Steps of each method may be performed by a programmable processor executing a program of instructions to perform functions of the method by operating on input data and generating output. The processor may thus be programmable and coupled to receive data and instructions from, and to transmit data and instructions to, a data storage system, at least one input device, and at least one output device. The application program may be implemented in a high-level procedural or object-oriented programming language, or in assembly or machine language if desired. In any case, the language may be a compiled or interpreted language. The program may be a full installation program or an update program. Application of the program on the system results in any case in instructions for performing the sketch-processing method, the 2D generating method, the 3D generating method and/or the fitting method. The computer program may alternatively be stored and executed on a server of a cloud computing environment, the server being in communication across a network with one or more clients. In such a case a processing unit executes the instructions comprised by the program, thereby causing the sketch-processing method, the 2D generating method, the 3D generating method and/or the fitting method to be performed on the cloud computing environment.

## Claims

1. A computer-implemented method for sketch-processing, the method comprising:
• providing (S10) one or more input sketches, the one or more input sketches including:
▪ at least one non-manifold sketch, each non-manifold sketch being a sketch that has at least one intra-sketch intersection, and/or
▪ at least one pair of sketches that share at least two inter-sketch intersections; and
• determining (S20) one or more output sketches from the one or more input sketches, each output sketch being closed and manifold, the determining of the one or more output sketches comprising:
- constructing (S210) a set of manifold sketches including each manifold input sketch, the constructing (S210) of the set of manifold sketches comprising, for each respective non-manifold input sketch, determining (S211) two or more respective manifold sketches based on the at least one intra-sketch intersection of the respective non-manifold input sketch, the constructed set further including each manifold sketch determined for each respective non-manifold input sketch; and
- combining (S220) each pair of manifold sketches of the constructed set that share at least two intersections, so as to form one or more closed and manifold sketches;
the one or more output sketches including each closed sketch of the constructed set and each closed and manifold sketch formed by the combining (S220).

2. The method of claim 1, wherein each input sketch is oriented, the determining (S211) of the two or more respective manifold sketches comprising recursively splitting the respective non-manifold input sketch, the recursive splitting comprising:
- browsing the respective non-manifold input sketch;
- encountering a point of the intra-sketch intersection;
- splitting the respective non-manifold input sketch at the encountered point of the intra-sketch intersection, thereby forming two sketch pieces; and
- for each sketch piece:
▪ if the sketch piece has no intra-sketch intersection, determining the sketch piece as one of the two or more respective manifold sketches; or
▪ if the sketch piece has at least one intra-sketch intersection, repeating the recursive splitting with the sketch piece.

3. The method of claim 2, wherein,
the one or more input sketches comprise one or more closed non-manifold input sketch, and for each closed respective non-manifold input sketch, the splitting of the respective non-manifold input sketch comprises:
• browsing the non-manifold input sketch starting from the point of the intra-sketch intersection;
• encountering another point of the intra-sketch intersection;
• extracting the sketch piece from the non-manifold input sketch between the point and the another point of the intra-sketch intersection, thereby defining one of the two sketch pieces and a remaining sketch piece of the non-manifold input sketch; and
• defining the remaining sketch piece as the another one of the two sketch pieces; and/or
the one or more input sketches comprise one or more open non-manifold input sketch, and for each open respective non-manifold input sketch, the splitting of the respective non-manifold input sketch comprises:
• browsing the non-manifold input sketch starting from the point of the intra-sketch intersection;
• encountering another point of the intra-sketch intersection;
• extracting the sketch piece from the non-manifold input sketch between the point and the another point of the intra-sketch intersection, thereby defining one of the two sketch pieces and two remaining sketch pieces of the non-manifold input sketch, each of the two remaining sketch pieces being open; and
• joining the remaining two sketch pieces, thereby forming the another one of the two sketch pieces.

4. The method of any one of claims 1 to 3, wherein each pair of manifold sketches comprises a first manifold sketch and a second manifold sketch, the forming of the one or more closed sketches comprising:
• for each pair of successive intersections between the first manifold sketch and the second manifold sketch along the second manifold sketch:
- extracting the portion of the second manifold sketch delimited by these two successive intersections;
- splitting the first manifold sketch between these two successive intersections, thereby obtaining one or two segments of the first manifold sketch; and
- recombining each segment of the first manifold sketch with the extracted portion of the second manifold sketch, thereby obtaining one or two closed and manifold sketches.

5. The method of any one of claims 1 to 4, wherein the constructed set of manifold sketches consists of unique sketches.

6. The method of any one of claims 1 to 5, wherein the providing of the one or more input sketches comprises:
• obtaining a set of sketch fragments;
• generating one or more aggregations of connected sketch fragments from the obtained set of sketch fragments, thereby obtaining the one or more input sketches.

7. The method of claim 6, wherein each fragment has two extremities, two fragments being connectable when the extremity of one is distant from the extremity of the other one below a predetermined threshold, the generating of the one or more aggregations of connected sketch fragments comprising, for each sketch fragment of the set, constructing one or more sketches containing the sketch fragment by, for each constructed sketch, successively connecting sketch fragments until no other sketch fragment from the set is connectable to the constructed sketch.

8. The method of claim 6 or 7, wherein the obtaining of the sketch fragments is performed upon user interaction and/or:
• by fitting one or more curves and/or detecting one or more specific geometric curves on:
- a drawing,
- automatically-detected edges on an image, and/or
- manually traced edges on an image, and/or
• by fitting oriented curves to a projection of profile-based approximate surfaces detected on 3D scans.

9. The method of any one of claims 1 to 8, wherein the constructed set of manifold sketches consists of closed sketches.

10. A computer-implemented method for generating a 2D shape, the method comprising:
• performing the method of any one of claims 1 to 9, thereby outputting one or more closed and manifold sketches;
• generating one or more 2D surfaces based on the outputted one or more closed and manifold sketches, each 2D surface being inside one of the determined one or more closed and manifold sketches; and
• forming the 2D shape based on the generated one or more 2D surfaces.

11. A computer-implemented method for generating a 3D shape, the method comprising:
• performing the method of any one of claims 1 to 9, thereby outputting one or more closed and manifold sketches;
• generating one or more 3D portions based on the outputted one or more closed and manifold sketches, each 3D portion being an extrusion or a revolution of one of the outputted one or more closed and manifold sketches; and
• forming the 3D shape based on the generated one or more 3D portions.

12. A computer-implemented method for fitting profile-based volumes to an approximate surface, the method comprising:
• segmenting the approximate surface into surface portions;
• detecting one or more directions for generation of a 3D profile-based volume and, for each direction, one or more respective surface portions; and
• for each of the one or more detected directions:
- generating a set of sketch fragments by projecting each of the one or more respective surface portions onto a plane orthonormal to the extrusion direction;
- performing the method of any one of claims 6 to 8 based on the generated set of sketch fragments, thereby outputting one or more closed and manifold sketches;
- generating a 3D profile-based volume from the generated one or more closed and manifold sketches.

13. A computer program comprising instructions for performing the method of any one of claims 1 to 9, the method of claim 10, the method of claim 11 and/or the method of claim 12.

14. A computer readable storage medium having recorded thereon a computer program of claim 13.

15. A system comprising a processor coupled to a memory , the memory having recorded thereon the computer program of claim 13, the system optionally further comprising a graphical user interface coupled to the processor.
